# EUROPEAN PATENT APPLICATION

(11) **EP 4 718 292 A1**
(43) Date of publication of application: **01.04.2026**
(21) Application number: 24811317.7
(22) Date of filing: 09.05.2024
(51) Int. Cl.: G06F 21/31, G06F 21/84, G06F 21/46, G06T 19/00, G06F 16/955, G06F 3/16, G06F 3/0488, G06F 3/01, G10L 13/08, H04W 4/80, G06F 40/205

(54) **AUGMENTED REALITY DEVICE FOR OUTPUTTING LOGIN INFORMATION AND OPERATING METHOD THEREOF**

(30) Priority: 25.05.2023 KR 20230067734
(71) Applicant: Samsung Electronics Co., Ltd., Suwon-si, Gyeonggi-do 16677 (KR)
(72) Inventor: LEE, Gunill, Suwon-si, Gyeonggi-do 16677 (KR); KIM, Deokho, Suwon-si, Gyeonggi-do 16677 (KR); LEE, Wonwoo, Suwon-si, Gyeonggi-do 16677 (KR); JEONG, Jiwon, Suwon-si, Gyeonggi-do 16677 (KR)
(74) Representative: Appleyard Lees IP LLP
(86) International application number: PCT/KR2024/006285
(87) International publication number: WO 2024/242378

(57) **Abstract**

Disclosed are an augmented reality (AR) device for providing login information and an operating method of the AR device. The AR device according to an embodiment of the present disclosure may execute an AR login mode, extract website information including a site name and a uniform resource locator (URL) of the website from an image obtained by photographing an external device through a camera, compare the extracted website information with website information of registered websites that has been pre-registered and stored in a database of memory, identify a registered website having website information matching the extracted website information, based on a result of the comparing, obtain login information including identification (ID) and password information of the identified registered website from the database, and output the obtained login information.

## Description

### Technical Field

The present disclosure relates to an augmented reality device for outputting login information and an operating method thereof. Specifically, the present disclosure discloses an augmented reality device for displaying login information including an ID and a password, which allow a user wearing the augmented reality device to log in to a website accessed by an external device, and an operating method thereof.

### Background Art

These days, users sign up to and use numerous websites. To use websites, it is necessary to log in to the websites by using login information, such as an ID and a password. However, since login information is different for each website, users experience inconvenience when unable to log in to the websites because of forgotten or incorrectly input login information when logging in to the websites.

To prevent such inconvenient situations, simple login features such as Samsung Pass, which support logging in through biometric authentication (e.g., a fingerprint or an iris) instead of directly inputting login information such as an ID and a password, are being popularized and used. However, there is a problem with the simple login features in that the simple login features may not be used when attempting to log in from a private personal computer (PC) other than a mobile device, or other PCs. Many users do not use simple login features (e.g., Samsung Pass) or password auto-fill features due to a psychological burden caused by threats to personal information security.

Augmented Reality is a technology that overlays virtual images onto the physical environment space or real world objects of the real world, and augmented reality devices (e.g., smart glasses) that utilize augmented reality technology are being practically used in everyday life for purposes such as information retrieval, route guidance, and camera capturing. In particular, smart glasses are worn as fashion items and are mainly used for outdoor activities.

### Disclosure of Invention

### Solution to Problem

An aspect of the present disclosure provides a method, performed by an augmented reality (AR) device, of providing login information. An operating method of the AR device, according to an embodiment of the present disclosure, may include executing an AR login mode for logging in to a website accessed and displayed by an external device. The operating method of the AR device, according to an embodiment of the present disclosure, may include extracting website information including a site name and a uniform resource locator (URL) of the website from an image captured through a camera in response to the AR login mode being executed. The operating method of the AR device, according to an embodiment of the present disclosure, may include comparing the extracted website information with website information of registered websites that has been pre-registered and stored in a database of memory and identifying a registered website having website information matching the extracted website information, based on a result of the comparing. The operating method of the AR device, according to an embodiment of the present disclosure, may include obtaining, from the database, login information including identification (ID) and password information of the identified registered website. The operating method of the AR device, according to an embodiment of the present disclosure, may include outputting the obtained login information.

Another aspect of the present disclosure provides an AR device for providing login information. The AR device according to an embodiment of the present disclosure may include: a camera configured to obtain an image by photographing an object in a real world space; a display unit including a waveguide and an optical engine; memory including a database storing at least one instruction and login information of registered websites; and at least one processor. The at least one processor may be configured to execute the at least one instruction to execute an AR login mode and obtain an image by photographing a website displayed by an external device through the camera in response to the AR login mode being executed. The at least one processor may be configured to execute the at least one instruction to extract, from the obtained image, website information including a site name and a URL of the website. The at least one processor may be configured to execute the at least one instruction to compare the extracted website information with website information of the registered websites prestored in the database and identify a registered website having website information matching the extracted website information, based on a result of the comparing. The at least one processor may be configured to execute the at least one instruction to obtain, from the database, login information including ID and password information of the identified registered website. The at least one processor may be configured to execute the at least one instruction to output the obtained login information through the display unit.

Another aspect of the present disclosure provides a method, performed by a mobile device, of automatically log in to a website. In an embodiment of the present disclosure, an operating method of the mobile device may include receiving a plurality of image frames captured by a camera of the AR device from an AR device paired through a short-range wireless communication scheme. The operating method of the mobile device may include extracting, from the plurality of received image frames, website information including a site name and a URL of a website to be logged in to. The operating method of the mobile device may include comparing the extracted website information with registered website information stored in a cloud server. The operating method of the mobile device may include identifying a registered website matching the extracted website information, based on a result of the comparing, and obtaining login information including ID and password information of the identified registered website. The operating method of the mobile device may include extracting an id and a password by parsing the obtained login information. The operating method of the mobile device may include performing automatic login by inputting the extracted id and password to the website.

### Brief Description of Drawings

The present disclosure may be easily understood in conjunction with the following detailed description and the accompanying drawings, and reference numerals denote structural elements.
FIG. 1 is a conceptual diagram for describing an operation in which an augmented reality (AR) device according to an embodiment of the present disclosure outputs login information for logging in to a website displayed by an external device.
FIG. 2 is a flowchart showing an operating method of an AR device, according to an embodiment of the present disclosure.
FIG. 3 is a block diagram illustrating components of an AR device according to an embodiment of the present disclosure.
FIG. 4A is a diagram illustrating an operation in which an AR device according to an embodiment of the present disclosure enters an AR login mode based on a user input.
FIG. 4B is a diagram illustrating an operation in which an AR device according to an embodiment of the present disclosure enters an AR login mode based on a user voice input.
FIG. 4C is a diagram illustrating an operation in which an AR device according to an embodiment of the present disclosure enters an AR login mode based on user gaze information.
FIG. 4D is a diagram illustrating an operation in which an AR device according to an embodiment of the present disclosure enters an AR login mode based on a hand pointing input.
FIG. 5 is a diagram illustrating an operation in which an AR device according to an embodiment of the present disclosure extracts website information and obtains login information of a registered website matching the extracted website information.
FIG. 6 is a flowchart showing a method, performed by an AR device, of registering login information of a new website, based on a result of identifying a registered website matching extracted website information, according to an embodiment of the present disclosure.
FIG. 7 is a flowchart showing a method, performed by an AR device, of registering login information of a new website, according to an embodiment of the present disclosure.
FIG. 8 is a diagram illustrating an operation in which an AR device according to an embodiment of the present disclosure manages storage capacity of a database in a process of registering login information of a new website.
FIG. 9 is a diagram illustrating an operation in which an AR device according to an embodiment of the present disclosure outputs login information of a website.
FIG. 10 is a diagram illustrating an operation in which an AR device according to an embodiment of the present disclosure outputs login information of a website.
FIG. 11 is a flowchart showing a method, performed by an AR device, of converting login information into a voice signal and outputting the voice signal, according to an embodiment of the present disclosure.
FIG. 12 is a diagram illustrating an operation in which an AR device according to an embodiment of the present disclosure outputs login information through a true wireless stereo (TWS) device.
FIG. 13 is a flowchart showing an operating method of an AR device and a mobile device, according to an embodiment of the present disclosure.
FIG. 14 is a diagram illustrating operations of an AR device, a mobile device, and a cloud server, according to an embodiment of the present disclosure.
FIG. 15 is a diagram illustrating an operating method of an AR device, a mobile device, and a cloud server, according to an embodiment of the present disclosure.

### Mode of the Invention

As for the terms as used in embodiments of the present specification, common terms that are currently widely used are selected as much as possible while taking into account the functions of the present disclosure. However, the terms may vary depending on the intention of those of ordinary skill in the art, precedents, the emergence of new technology, and the like. Also, in a specific case, there are also terms arbitrarily selected by the applicant. In this case, the meaning of the terms will be described in detail in the description of embodiments. Therefore, the terms as used in the present specification should be defined based on the meaning of the terms and the description throughout the present disclosure rather than simply the names of the terms.

The singular forms as used herein are intended to include the plural forms as well unless the context clearly indicates otherwise. Unless defined otherwise, all terms including technical or scientific terms as used herein have the same meaning as commonly understood by those of ordinary skill in the art disclosed in the present specification.

Throughout the present disclosure, the expression "a portion includes a certain element" means that a portion further includes other elements rather than excludes other elements unless otherwise stated. Also, the terms such as "unit" and "module" described in the specification mean units that process at least one function or operation, and may be implemented as hardware, software, or a combination of hardware and software.

The expression "configured to" as used in the present disclosure may be used interchangeably with, for example, "suitable for," "having the capacity to," "designed to," "adapted to," "made to," or "capable of" depending on a situation. The term "configured to" may not necessarily mean only "specifically designed to" in hardware. Alternatively, in some situations, the expression "a system configured to" mean that the system is "capable of ..." with other devices or components. For example, "a processor configured to perform A, B, and C" may refer to a dedicated processor (e.g., an embedded processor) for performing corresponding operations or a generic-purpose processor (e.g., a central processing unit (CPU) or an application processor (AP)) capable of performing corresponding operations by executing one or more software programs stored in memory.

In the present disclosure, the processor may include various processing circuitries and/or a plurality of processors. For example, the term "processor" as used herein, including the claims, may include various processing circuits, including at least one processor. One or more processors in the 'at least one processor' may be configured to individually and/or collectively perform various functions described herein in a distributed manner. As used herein, the 'processor,' the 'at least one processor,' and the 'one or more processors' may be configured to perform various functions. However, these terms may include, without limitation, a situation where one processor performs some functions and other processor(s) perform other functions, and a situation where a single processor may perform all the functions. In addition, the at least one processor may include a combination of processors that perform the disclosed various functions in a distributed manner. The at least one processor may execute at least one instruction or program code to accomplish or perform various functions.

Also, when one element is referred to as being "connected" or "coupled" to another element, the one element may be directly connected or coupled to the other element, but it will be understood that the elements may be connected or coupled to each other via an intervening element therebetween unless otherwise stated.

In the present disclosure, 'augmented reality (AR)' refers to displaying a virtual image together within the physical environment space of the real world or displaying a real world object and a virtual image together.

In the present disclosure, an 'AR device' is a device capable of expressing AR and may be, for example, not only AR glasses in a form of glasses that a user wears on his/her face, but also a head mounted display apparatus (HMD) or an AR helmet worn on the head.

In the present disclosure, an 'external device' refers to a device used by a user wearing an AR device. The external device may be, for example, any one of a personal computer (PC), a laptop computer, a tablet PC, an e-book reader, a digital broadcasting terminal, a personal digital assistant (PDA), a portable multimedia player (PMP), a navigation, an MP3 player, or a camcorder. In an embodiment of the present disclosure, the external device may include a mobile device such as a smartphone.

In the present disclosure, functions related to 'artificial intelligence' are operated through a processor and memory. The processor may be implemented as one or more processors. In this case, the one or more processors may be a general-purpose processor, such as a CPU, an AP, or a digital signal processor (DSP), a dedicated graphics processor, such as a graphics processing unit (GPU) or a vision processing unit (VPU), or a dedicated artificial intelligence processor, such as a neural processing unit (NPU). The one or more processors may perform control so that input data is processed in accordance with a predefined operation rule or an artificial intelligence model, which is stored in the memory. Alternatively, in a case that the one or more processors are dedicated artificial intelligence processors, the dedicated artificial intelligence processors may be designed with a hardware structure specialized for processing a specific artificial intelligence model.

The predefined operation rule or the artificial intelligence model is made through learning. The expression "being made through learning" means that the predefined operation rule or the artificial intelligence model configured to perform desired characteristics (or purposes) is made in such a manner that a basic artificial intelligence model is trained by a learning algorithm using a large number of training data. Such learning may be performed by the device itself on which the artificial intelligence according to the present disclosure is performed, or may be performed through a separate server and/or system. Examples of the learning algorithm may include supervised learning, unsupervised learning, semi-supervised learning, or reinforcement learning, but the present disclosure is not limited to the examples described above.

In the present disclosure, the 'artificial intelligence' model may include a plurality of neural network layers. Each of the neural network layers has a plurality of weight values and performs neural network operations through operations between the plurality of weight values and an operation result of a previous layer. The plurality of weight values that the plurality of neural network layers have may be optimized by the learning result of the artificial intelligence model. For example, the plurality of weight values may be updated so that a loss value or a cost value obtained by the artificial intelligence model during the learning process is reduced or minimized. The artificial neural network may include a deep neural network (DNN). Examples of the artificial neural network include a convolutional neural network (CNN), a recurrent neural network (RNN), a restricted Boltzmann machine (RBM), a deep belief network (DBN), a bidirectional recurrent deep neural network (BRDNN), or deep Q-networks, etc., but the present disclosure is not limited to the examples described above.

In the present disclosure, 'vision recognition' refers to image signal processing that inputs an image to an artificial intelligence model and recognizes (detects) an object from the input image, or classifies the object into a specific category, or segments the object, through inference using the artificial intelligence model. In an embodiment of the present disclosure, vision recognition may refer to image processing that recognizes a login area of a website from an image captured by a camera or recognizes a hand of a user by using an artificial intelligence model.

Hereinafter, an embodiment of the present disclosure will be described in detail with reference to the accompanying drawings, so that those of ordinary skill in the art may easily carry out the present disclosure. However, the present disclosure may be implemented in various different forms and is not limited to the embodiments of the present disclosure described herein.

Hereinafter, embodiments of the present disclosure will be described in detail with reference to the drawings.

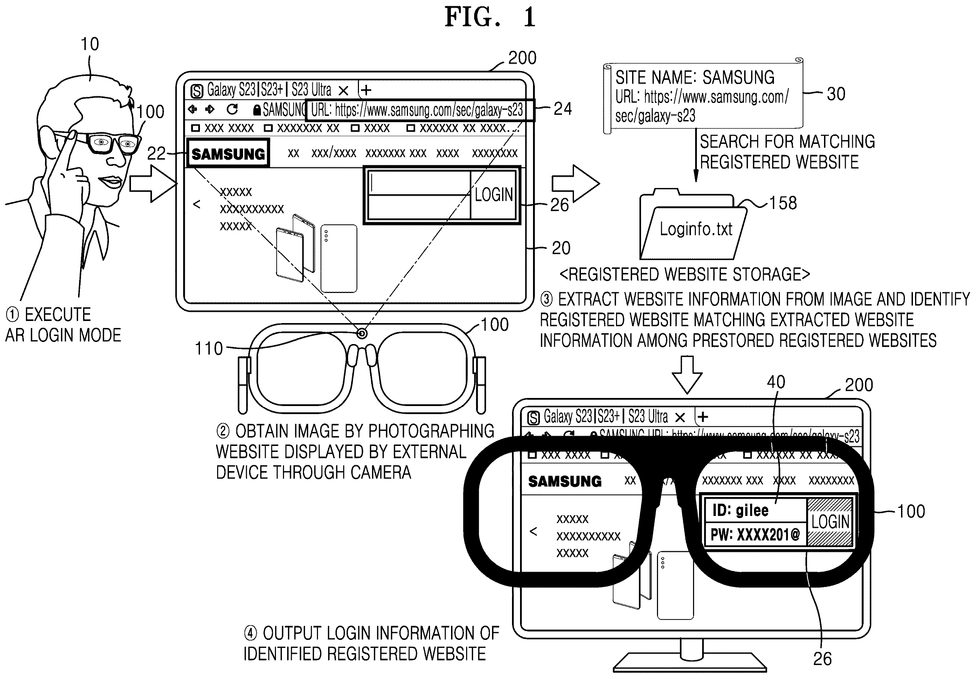

FIG. 1 is a conceptual diagram for describing an operation in which an AR device 100 according to an embodiment of the present disclosure outputs login information 40 for logging in to a website 20 displayed by an external device 200.

The AR device 100 is a device capable of expressing AR and may be configured as, for example, AR glasses in a form of glasses that a user 10 wears on his/her face. In FIG. 1, the AR device 100 is illustrated as AR glasses, but is not limited thereto. For example, the AR device 100 may be implemented as a head mounted display apparatus (HMD) or an AR helmet, which is worn on the head.

The external device 200 is a device used by the user 10 wearing the AR device 100, and may access the website 20 and display a screen of the website 20. Referring to FIG. 1, the external device 200 is illustrated as a personal computer (PC), but is not limited thereto. The external device 200 may be, for example, any one of a laptop computer, a tablet PC, an e-book reader, a digital broadcasting terminal, a personal digital assistant (PDA), a portable multimedia player (PMP), a navigation, an MP3 player, or a camcorder. In an embodiment of the present disclosure, the external device 200 may include a mobile device such as a smartphone.

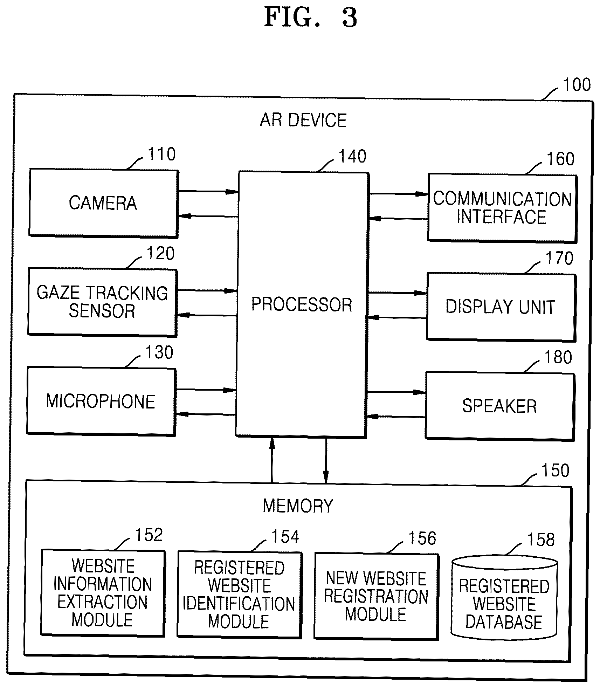

Referring to FIG. 1, the AR device 100 may include a camera 110. In FIG. 1, only the minimum components for describing the functions and/or operations of the AR device 100 are illustrated, and components included in the AR device 100 are not limited to those illustrated in FIG. 1. The components of the AR device 100 are described in detail with reference to FIG. 3.

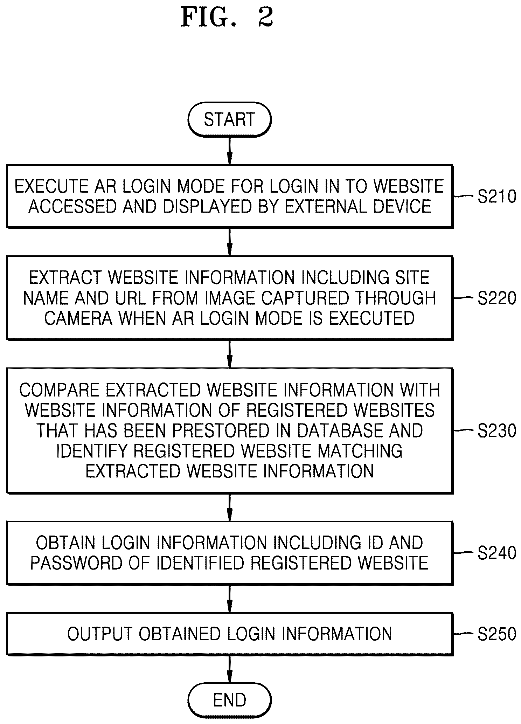

In the embodiment illustrated in FIG. 1, the AR device 100 may execute an AR login mode (operation ①), may obtain an image by photographing the website 20 displayed by the external device 200 through the camera 110 (operation ②), may extract website information 30 from the image and identify a registered website matching the extracted website information among registered websites prestored in a registered website database 158 (operation ③), and may output login information 40 of the identified registered website (operation ④). Hereinafter, the functions and/or operations of the AR device 100 are described in detail with reference to FIGS. 1 and 2 together.

FIG. 2 is a flowchart showing an operating method of the AR device 100, according to an embodiment of the present disclosure.

In operation S210, the AR device 100 executes an AR login mode for logging in to the website (see 20 of FIG. 1) accessed and displayed by the external device (see 200 of FIG. 1). In the present disclosure, the 'AR login mode' refers to an operation mode that obtains an image by using the camera (see 110 of FIG. 1) to photograph the external device 200 that displays the website 20, extracts information of the website 20 from the image, and outputs the login information 40 matching the extracted information of the website 20. Referring to FIG. 1 together, the AR device 100 may receive a user input of pressing a button mapped to a function of executing the AR login mode and may execute the AR login mode in response to the user input of pressing the button being received.

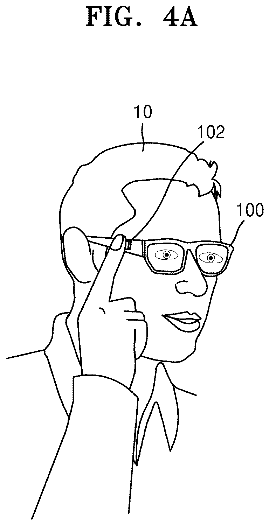

However, the present disclosure is not limited thereto, and in an embodiment of the present disclosure, the AR device 100 may receive a voice input (e.g., "Execute the AR login mode~") for executing the AR login mode, and may execute the AR login mode based on the received voice input. In an embodiment of the present disclosure, the AR device 100 may recognize a user's hand pointing input of pointing to an icon for executing the AR login mode or pointing to a login area 26 of the website 20 displayed on the external device 200, and may execute the AR login mode in response to the hand pointing input being recognized. In an embodiment of the present disclosure, the AR device 100 may include a gaze tracking sensor (see 120 of FIG. 3), and may detect a gaze direction of a user by using the gaze tracking sensor 120 and execute the AR login mode when the gaze point by the detected gaze direction is located in the login area 26 of the website 20. A specific embodiment in which the AR device 100 executes the AR login mode is described in detail with reference to FIGS. 4A to 4D.

In operation S220 of FIG. 2, in response to the AR login mode being executed, the AR device 100 extracts the website information 30 including a site name and a uniform resource locator (URL) from the image captured through the camera (see 110 of FIG. 1). Referring to FIG. 1 together, the AR device 100 may obtain the image by using the camera 110 to photograph the website 20 accessed and displayed by the external device 200. The AR device 100 may extract a site name area 22, a URL area 24, and the login area 26 of the website 20 from the obtained image. The AR device 100 may detect the site name area, the URL area, and the login area 26 of the website 20 from the image by performing vision recognition using an artificial intelligence model. In an embodiment of the present disclosure, the AR model may be a deep neural network model trained to recognize the forms of the site name area, the URL area, and the login area from the image through supervised learning of applying an image as input and applying the forms of the standardized site name area, URL area, and login area as ground truth. The deep neural network model may be, for example, a CNN model, but is not limited thereto.

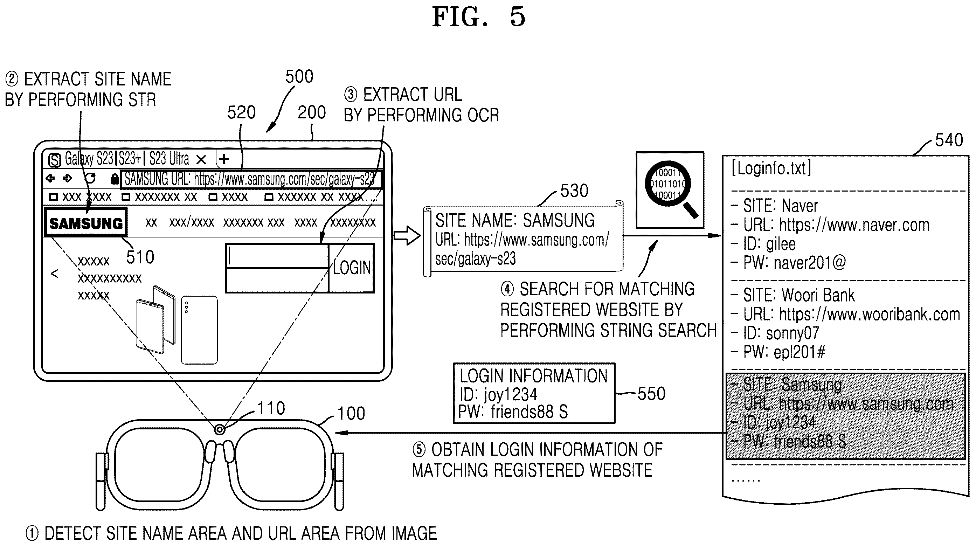

The AR device 100 may extract the website information (see 30 of FIG. 1) including the site name and the URL from the detected site name area and URL area. In an embodiment of the present disclosure, the AR device 100 may extract text indicating the site name from an image included in the detected site name area 22 by performing scene text recognition (STR). In an embodiment of the present disclosure, the AR device 100 may extract text indicating the URL from an image included in the URL area 24 by performing optical character recognition (OCR). A specific embodiment in which the AR device 100 extracts the website information 30 from the image captured by the camera 110 is described in detail with reference to FIG. 5.

In operation S230 of FIG. 2, the AR device 100 compares the extracted website information (see 30 of FIG. 1) with the website information of the registered websites prestored in the database, and identifies a registered website matching the extracted website information. In the present disclosure, the 'registered website' refers to a website where the login information including an ID and password for logging in to the website is prestored and registered in the database by a user input. Referring to FIG. 1 together, the AR device 100 may compare the extracted website information 30 with the website information of the registered websites prestored in the registered website database 158, and may identify the registered website having information matching the extracted website information. In an embodiment of the present disclosure, the AR device 100 may compare the extracted website information with the website information of the registered websites stored in the registered website database 158 by performing a string search. The AR device 100 may identify the registered website having the matching website information, based on a result of the comparing.

In operation S240 of FIG. 2, the AR device 100 obtains the login information 40 including the ID and the password of the identified registered website. Referring to FIG. 1 together, the AR device 100 may obtain information about the ID 'gilee' and the password 'XXXX201@' of the identified registered website.

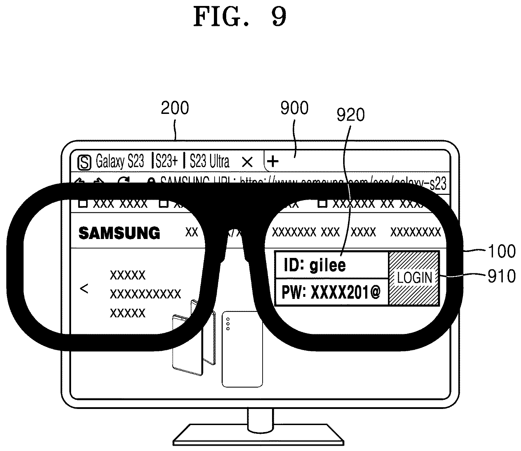

In operation S250 of FIG. 2, the AR device 100 outputs the obtained login information 40. Referring to the embodiment illustrated in FIG. 1, the AR device 100 may overlay and display the login information 40 on the login area 22 of the website 20 displayed by the external device 200 by projecting, onto a waveguide, at least one of letters, numbers, special symbols, and combinations thereof representing the ID and the password included in the login information 40. However, the present disclosure is not limited thereto, and in an embodiment of the present disclosure, the AR device 100 may overlay and display the login information 40 on an arbitrary area of a real world object viewed by the user. In an embodiment of the present disclosure, the AR device 100 may convert an ID and a password in text form into a voice signal by performing text-to-speech (TTS), and may output the converted voice signal through a speaker. In an embodiment of the present disclosure, the AR device 100 may output a voice signal indicating the login information 40 through a TWS device. A specific embodiment in which the AR device 100 outputs the login information 40 is described in detail with reference to FIGS. 9 to 12.

A case where the external device 200 displays the screen of the website 20 and the AR device 100 outputs the login information 40 for logging in to the website 20 is illustrated in FIGS. 1 and 2 and has been described with reference to FIGS. 1 and 2, but the present disclosure is not limited thereto. In the present disclosure, the external device 200 may display an execution screen of Internet banking, public certificate, or application, and the AR device 100 may output login information for logging in to the Internet banking, public certificate, or application in the same manner as described above.

Today, the user 10 signs up and uses numerous websites, internet banking, public certificates, applications, etc. There is a problem in that when the user 10 attempts to log in to a website, internet banking, a public certificate, or an application, the user 10 fails to log in when the user 10 has forgotten or incorrectly inputs login information, which causes inconvenience. To prevent such inconvenient situations, simple login features such as Samsung Pass, which support logging in through biometric authentication (e.g., a fingerprint or an iris) instead of directly inputting login information such as an ID and a password, are being popularized and used. However, the simple login features have a limitation that may not be used when attempting to log in from a private personal computer (PC) other than a mobile device, or other PCs. In addition, web browsers such as Chrome or Edge provide auto-fill password save features, but it may be ultimately difficult to verify accurate login information when login information is absolutely necessary, for example, when reinstalling an operating system, or in a new PC or a new mobile device. Many users do not use simple login features (e.g., Samsung Pass) or password auto-fill features due to a psychological burden caused by threats to personal information security.

The present disclosure aims to provide the AR device 100, which eliminates inconvenience in daily life and improves user convenience by automatically outputting login information when accessing a website, internet banking, a public certificate, or an application through the external device 200, and the operating method of the AR device 100.

The AR device 100 according to the embodiment illustrated in FIGS. 1 and 2 extracts the website information 30 including the site name and the URL of the website 20, identifies the registered website matching the extracted website information 30, and outputs the login information 40 of the identified registered website, thereby preventing inconvenience in daily life, such as login failure due to not remembering login information, and improving user convenience. In addition, the present disclosure provides a technical effect of preventing personal information from being exposed to the outside and thus provide high security, because the login information 40 is displayed only to the user 10 wearing the AR device 100. The function and/or operating method of the AR device 100 according to an embodiment of the present disclosure is not limited to outputting the login information for the website 20, Internet banking, a public certificate, or an application, and may also be utilized to output information that the user 10 is curious about or needs to remember, thereby providing a technical effect of providing information easily and quickly.

FIG. 3 is a block diagram illustrating components of the AR device 100 according to an embodiment of the present disclosure.

Referring to FIG. 3, the AR device 100 may include a camera 110, a gaze tracking sensor 120, a microphone 130, a processor 140, memory 150, a communication interface 160, a display unit 170, and a speaker 180. The camera 110, the gaze tracking sensor 120, the microphone 130, the processor 140, the memory 150, the communication interface 160, the display unit 170, and the speaker 180 may be electrically and/or physically connected to each other. Only components for describing the operation of the AR device 100 are illustrated in FIG. 3, and the components included in the AR device 100 are not limited to those illustrated in FIG. 3. In an embodiment of the present disclosure, the AR device 100 may further include an inertial measurement unit (IMU) sensor. In an embodiment of the present disclosure, the AR device 100 is implemented as a mobile device. In this case, the AR device 100 may further include a battery that supplies driving power to the camera 110, the gaze tracking sensor 120, the microphone 130, the processor 140, the communication interface 160, the display unit 170, and the speaker 180.

In an embodiment of the present disclosure, the AR device 100 may not include the microphone 130 or the speaker 180.

The camera 110 is configured to obtain an image of an object by photographing the object in a real world space. The camera 110 may include a lens module, an image sensor, and an image processing module. The camera 110 and a second camera 114 may obtain a still image or video of the object by an image sensor (e.g., complementary metal oxide semiconductor (CMOS) or charge coupled device (CCD)). The video may include a plurality of image frames obtained continuously by photographing the object through the camera 110. The image processing module may encode a still image including a single image frame obtained through the image sensor or video data including a plurality of image frames obtained through the image sensor and may transmit the encoded still image or video data to the processor 140.

In an embodiment of the present disclosure, the camera 110 may photograph the external device (see 200 of FIG. 1) located in a real world space. The external device 200 may display an execution screen of a website, internet banking, a public certificate, or an application, and the camera 110 may obtain an image by capturing the screen displayed by the external device 200. The camera 110 may provide image data of the obtained image to the processor 140.

The gaze tracking sensor 120 is a device configured to detect the gaze direction of a user's eyes and track the gaze direction. The gaze tracking sensor 120 may detect the gaze direction of the user by detecting an image of a person's pupils or by detecting the direction or amount of reflected light of near-infrared light, etc. reflected from the cornea. In an embodiment of the present disclosure, the gaze tracking sensor 120 may include a left-eye gaze tracking sensor and a right-eye gaze tracking sensor that may detect the gaze direction of the user's left eye and the gaze direction of the user's right eye, respectively. Detecting the gaze direction of the user may include obtaining gaze information related to the gaze of the user. In an embodiment of the present disclosure, the gaze tracking sensor 120 may detect a gaze point where the gaze direction of the user's left eye detected by the left-eye gaze tracking sensor and the gaze direction of the user's right eye detected by the right-eye gaze tracking sensor converge, and may obtain three-dimensional (3D) position coordinate value information of the gaze point.

The microphone 130 is a device configured to receive sound from the real world space or the external device and convert the received sound into an audio signal. In an embodiment of the present disclosure, the microphone 130 may receive a user's voice and convert the received voice into an audio signal.

The processor 140 may execute one or more instructions of a program stored in the memory 150. The processor 140 may include hardware components that perform arithmetic, logic, and input/output operations and image processing. In FIG. 3, the processor 140 is illustrated as a single element, but is not limited thereto. In an embodiment of the present disclosure, the processor 140 may include one or more elements. The one or more processors included in the processor 140 may be circuitry, such as a system on chip (SoC) or an integrated circuit (IC). The processor 140 may be a general-purpose processor, such as a CPU, an AP, or a DSP, a dedicated graphics processor, such as a GPU or a VPU, or a dedicated artificial intelligence processor, such as an NPU. The processor 140 may execute at least one instruction or program code stored in the memory 150 to perform control so that input data is processed in accordance with a predefined operation rule or an artificial intelligence model. Alternatively, in a case that the processor 140 is a dedicated artificial intelligence processor, the dedicated artificial intelligence processor may be designed with a hardware structure specialized for processing of a specific artificial intelligence model.

The memory 150 may include, for example, at least one type of storage medium from among flash memory-type memory, hard disk-type memory, multimedia card micro-type memory, card-type memory (e.g., secure digital (SD) or extreme digital (XD) memory), random access memory (RAM), static random access memory (SRAM), read-only memory (ROM), electrically erasable programmable read-only memory (EEPROM), programmable read-only memory (PROM), or optical disc.

The memory 150 may store instructions related to the functions and/or operations of the AR device 100 to obtain login information of a website displayed by the external device and output the login information. In an embodiment of the present disclosure, the memory 150 may store at least one of instructions, algorithms, data structures, program code, and application programs, which may be read by the processor 140. The instructions, algorithms, data structures, and program code, which are stored in the memory 150, may be implemented in, for example, programming or scripting languages, such as C, C++, Java, or assembler.

In the following embodiments, the processor 140 may be implemented by executing the instructions or program code stored in the memory 150.

The processor 140 may execute an AR login mode based on a user input. In an embodiment of the present disclosure, in response to a user input of pressing a button among the buttons of the AR device 100 that is mapped to the function of executing the AR login mode being received, the processor 140 may execute the AR login mode. In an embodiment of the present disclosure, the microphone 130 may receive a voice input of executing the AR login mode, for example, a voice input such as "Execute the AR login mode~", and the processor 140 may convert the voice input received through the microphone 130 into text and execute the AR login mode based on the converted text. In an embodiment of the present disclosure, the camera 110 may obtain an image by photographing a user's hand, and the processor 140 may recognize an area pointed to by the user's hand from the image and may execute the AR login mode when the recognized area is located in the login area of the website. In an embodiment of the present disclosure, an icon for executing the AR login mode may be displayed on the display unit 170, and the processor 140 may execute the AR login mode when the user's hand points to the icon. In an embodiment of the present disclosure, the gaze tracking sensor 120 may detect the gaze direction of the user's left eye and the gaze direction of the user's right eye and may detect the position of the gaze point where the gaze direction of the left eye and the gaze direction of the right eye converge, and the processor 140 may execute the AR login mode in response to the position of the gaze point being located on the login area of the website.

In response to the AR login mode being executed, the processor 140 may control the camera 110 to obtain an image by photographing the website displayed by the external device.

A website information extraction module 152 includes instructions or program code related to the function and/or operation of extracting a site name and a URL of the website from the image. The processor 140 may extract, by executing the instructions or program code of the website information extraction module 152, website information from the image obtained through the camera 110. In an embodiment of the present disclosure, the website information extraction module 152 may include an artificial intelligence model that performs vision recognition to detect a standardized site name area and URL area from the image. The artificial intelligence model may be a deep neural network model trained to recognize the forms of the site name area and the URL area from the image through supervised learning of applying an image as input and applying the forms of the standardized site name area and URL area as ground truth. The processor 140 may input an image to the deep neural network model and detect the site name area and the URL area from the image by performing inference using the deep neural network model. In an embodiment of the present disclosure, the processor 140 may extract text indicating the site name from an image included in the detected site name area by performing STR. In an embodiment of the present disclosure, the processor 140 may extract text indicating the URL from an image included in the URL area by performing OCR.

A registered website identification module 154 includes instructions or program code related to the function and/or operation of identifying a matching registered website by comparing the extracted website information with the website information of the registered websites prestored in the registered website database 158. In the present disclosure, the 'registered website' refers to a website where the login information including the ID and the password for logging in to the website is prestored and registered in the database by a user input. The processor 140 may compare the website information extracted from the image, i.e., the site name and URL, with the site names and URLs of the registered websites prestored in the registered website database 158 and identify a registered website having information matching the extracted website information, by executing the instructions or program code of the registered website identification module 154. In an embodiment of the present disclosure, the processor 140 may compare text included in the extracted website information with text of the registered websites stored in the registered website database 158 and identify a registered website having website information matching a result of the comparing, by performing a string search.

When the matching registered website is identified from the result of the comparing, the processor 140 may obtain login information including an ID and a password of the registered website identified from the registered website database 158.

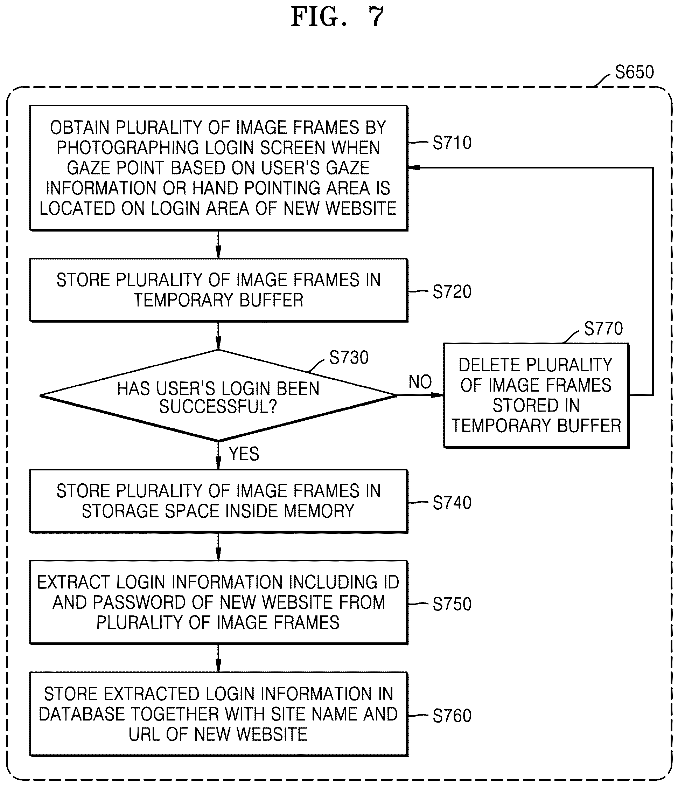

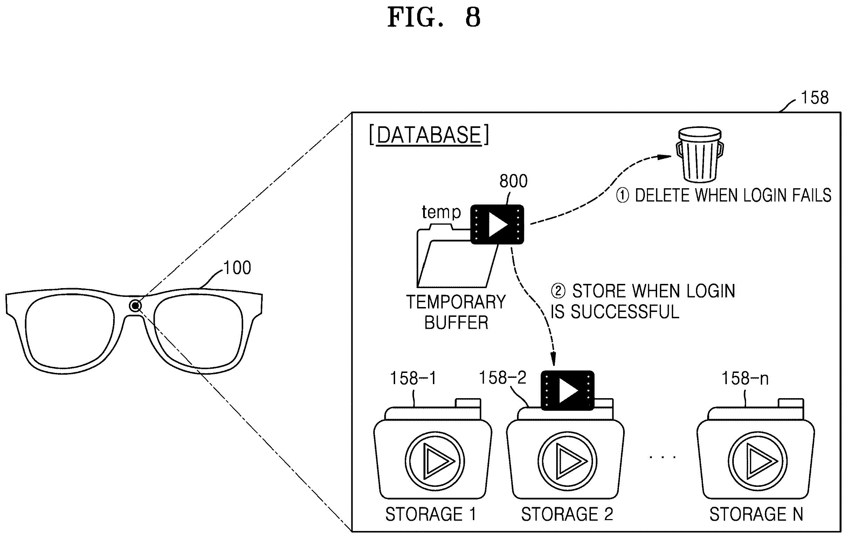

When the matching registered website is not identified from the result of the comparing, the processor 140 may perform a new website registration operation. A new website registration module 156 includes instructions or program code related to the function and/or operation of registering and storing login information of an unregistered website that is not registered in the registered website database 158. The processor 140 may store, by executing the instructions or program code of the new website registration module 156, an ID and a password for logging in to a new website in the registered website database 158 together with website information of the new website. In an embodiment of the present disclosure, the processor 140 may control the camera 110 to obtain a plurality of image frames by photographing a login screen of the new website displayed by the external device and extract an ID and a password of the new website from the plurality of obtained image frames. The processor 140 may store the extracted ID and password of the new website in the registered website database 158 together with a site name and a URL of the new website. A specific embodiment in which the processor 140 registers the login information of the new website is described in detail with reference to FIGS. 7 and 8.

In an embodiment of the present disclosure, the processor 140 may store, in a temporary buffer of the memory 150, a plurality of image frames obtained by photographing a login process on the new website, and when login on the new website fails, delete the plurality of image frames stored in the temporary buffer. Only when the login on the new website is successful, the processor 140 may store the plurality of image frames in a storage space of the memory 150. A specific embodiment in which the processor 140 manages the storage space of the memory in the process of registering the new website is described in detail with reference to FIG. 8.

The registered website database 158 is a database that stores login information of the registered websites, such as ID and password information. In an embodiment of the present disclosure, the registered website database 158 may store the login information in text form. The login information stored in the registered website database 158 may be stored together with the site name and the URL of the relevant website.

The registered website database 158 may include non-volatile memory. The non-volatile memory refers to a storage medium that stores and retains information even when power is not supplied thereto, and may use the stored information again when power is supplied thereto. The non-volatile memory may include at least one of, for example, flash memory, hard disk, solid state drive (SSD), multimedia card micro-type memory, card-type external memory (e.g., SD or XD memory), ROM, magnetic disk, or optical disk. In FIG. 3, the registered website database 158 is illustrated as being included in the memory 150, but the present disclosure is not limited to that illustrated in the drawing. In an embodiment of the present disclosure, the registered website database 158 may not be included in the memory 150 and may be implemented as a separate component.

However, the present disclosure is not limited thereto, and in an embodiment of the present disclosure, the registered website database 158 may be stored in a web storage or a cloud server that is accessible through a network and performs a storage function. In this case, the AR device 100 may communicatively connect to the web storage or the cloud server through the communication interface 160 and perform data transmission and reception. The processor 140 may receive the login information of the registered website from the web storage or the cloud server through the communication interface 160.

The processor 140 may output the login information on the display unit 170. In an embodiment of the present disclosure, the processor 140 may overlay and display the login information on the login area of the website displayed by the external device by projecting, onto the waveguide of the display unit 170, at least one of letters, numbers, special symbols, and combinations thereof representing the ID and the password included in the login information. However, the present disclosure is not limited thereto, and in an embodiment of the present disclosure, the processor 140 may display the login information on an arbitrary area of a real world object viewed by the user through the AR device 100.

In an embodiment of the present disclosure, the memory 150 may further include a TTS module, and the processor 140 may convert the login information in text form into a voice signal by executing execute instructions or program code included in the TTS module. The processor 140 may control the speaker 180 to output the converted voice signal.

The communication interface 160 is a device configured to perform data communication with the external device or the cloud server. In an embodiment of the present disclosure, the communication interface 160 may include a short-range wireless communication module and a mobile communication module.

The short-range wireless communication module (short-range wireless communication unit) is configured to connect to the external device by using a wireless communication network and perform data transmission and reception. The short-range wireless communication module may include, for example, at least one hardware module from among Wireless Fidelity (Wi-Fi), Wi-Fi Direct communication unit, a Bluetooth communication unit, a Bluetooth Low Energy (BLE) communication unit, a Near Field Communication (NFC) unit, a Zigbee communication unit, an Ant+ communication unit, or a µWave communication unit, but is not limited thereto. In an embodiment of the present disclosure, the communication interface 160 may be paired with the external device (e.g., the mobile device) through Bluetooth communication and may perform data transmission and reception with the external device by using Bluetooth communication. However, the present disclosure is not limited thereto, and the communication interface 160 may perform data transmission and reception with the external device by using at least one short-range wireless communication network from among Wi-Fi, Wi-Fi Direct, BLE, NFC, Zigbee, Ant+, or µWave.

The mobile communication module is a communication module configured to transmit and receive wireless signals with at least one of a base station, an external device, or a server on a mobile communication network. The mobile communication module may transmit and receive data by using, for example, at least one communication scheme among 5^{th} generation (5G) mmWave communication, 5G Sub-6 communication, Long Term Evolution (LTE) communication, or 3^{rd} generation (3G) mobile communication. In an embodiment of the present disclosure, the mobile communication module may transmit and receive data with the server under the control by the processor 140.

The display unit 170 is configured to display login information. In a case that the AR device 100 is configured with AR glasses, the display unit 170 may be configured with a lens optical system and may include a waveguide and an optical engine. The optical engine may include a projector that generates light for a graphic user interface (UI) including text, icons, or virtual images, and projects the light onto the waveguide. The optical engine may include, for example, an imaging panel, an illumination optical system, a projection optical system, etc. In an embodiment of the present disclosure, the optical engine may be disposed in the frame or temple of the AR glasses. In an embodiment of the present disclosure, the optical engine may overlay and display the login information on the login area of the website displayed by the external device by projecting, onto the waveguide, a virtual UI including at least one of letters, numbers, special symbols, and combinations thereof representing the ID and the password included in the login information under the control by the processor 140.

However, the present disclosure is not limited thereto, and the display unit 170 may include, for example, at least one of liquid crystal display, thin-film transistor-liquid crystal display, organic light-emitting diode, flexible display, 3D display, or electrophoretic display.

The speaker 180 is configured to output an audio signal. In an embodiment of the present disclosure, the speaker 180 may output a voice message obtained by converting the login information into a voice signal under the control by the processor 140.

FIG. 4A is a diagram illustrating an operation in which the AR device 100 enters an AR login mode based on a user input, according to an embodiment of the present disclosure.

Referring to FIG. 4A, the AR device 100 may include a button 102. In a case that the AR device 100 is implemented as AR glasses, the button 102 may be a hardware button protruding externally and disposed on the temple of the AR glasses. However, the present disclosure is not limited thereto, and the button 102 may also be implemented as a graphic UI displayed on a touchscreen to receive a touch input. In this case, the touchscreen may be formed on the temple of the glasses.

The button 102 may be pre-mapped to the function of executing the AR login mode. The AR device 100 may receive a user input of pressing the button 102 and executing the AR login mode in response to the user input being received.

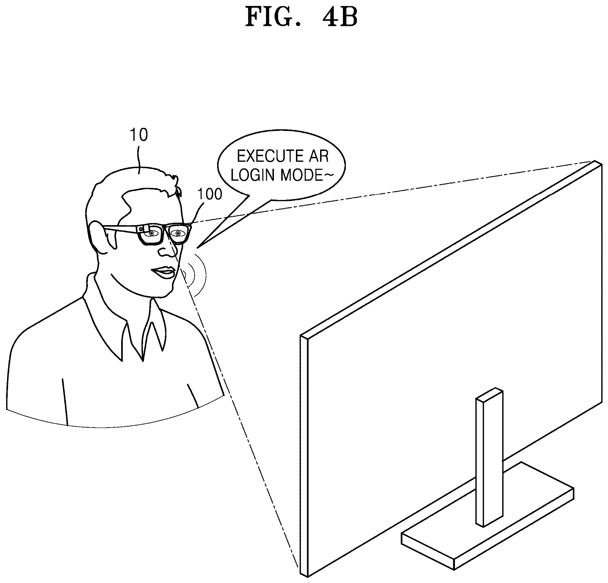

FIG. 4B is a diagram illustrating an operation in which the AR device 100 enters an AR login mode based on a voice input of the user 10, according to an embodiment of the present disclosure.

Referring to FIG. 4B, the user 10 may make an utterance such as "Execute the AR login mode~" and the AR device 100 may receive the user's utterance through the microphone (see 130 of FIG. 3) and convert the user's utterance into an audio signal. The memory (see 150 of FIG. 3) of the AR device 100 may store an automatic speech recognition (ASR) model and a natural language understanding (NLU) model, and the processor (see 140 of FIG. 3) may convert, by executing instructions or program code of the ASR model, an audio signal obtained through the microphone 130 into text. The processor 140 may recognize a user's intent from text by executing the instructions or program code of the NLU model. The processor 140 may execute the AR login mode based on the recognized intent.

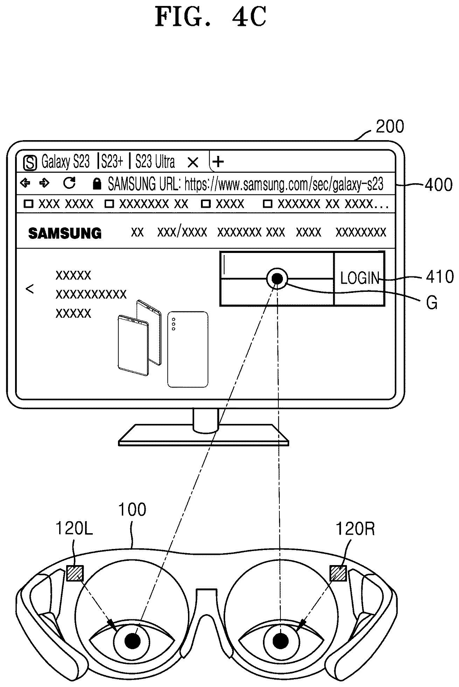

FIG. 4C is a diagram illustrating an operation in which the AR device 100 enters an AR login mode based on user gaze information, according to an embodiment of the present disclosure.

Referring to FIG. 4C, the AR device 100 may include gaze tracking sensors 120L and 120R. The gaze tracking sensors 120L and 120R may detect the gaze direction of the user by detecting an image of a person's pupils or by detecting the direction or amount of reflected light of near-infrared light, etc. reflected from the cornea. In an embodiment of the present disclosure, the gaze tracking sensors 120L and 120R may include a left-eye gaze tracking sensor 120L that detects the gaze direction of the user's left eye and a right-eye gaze tracking sensor 120R that detects the gaze direction of the user's right eye. The AR device 100 may detect a gaze point G where the gaze direction of the user's left eye detected by the left-eye gaze tracking sensor 120L and the gaze direction of the user's right eye detected by the right-eye gaze tracking sensor 120R converge, and may obtain position information of the gaze point G. The AR device 100 may execute an AR login mode when the position of the obtained gaze point G is located on a login area 410 of a website 400 displayed by an external device 200. In an embodiment of the present disclosure, the AR device 100 may execute the AR login mode when the gaze point G remains on the login area 410 for a preset time (e.g., 10 seconds).

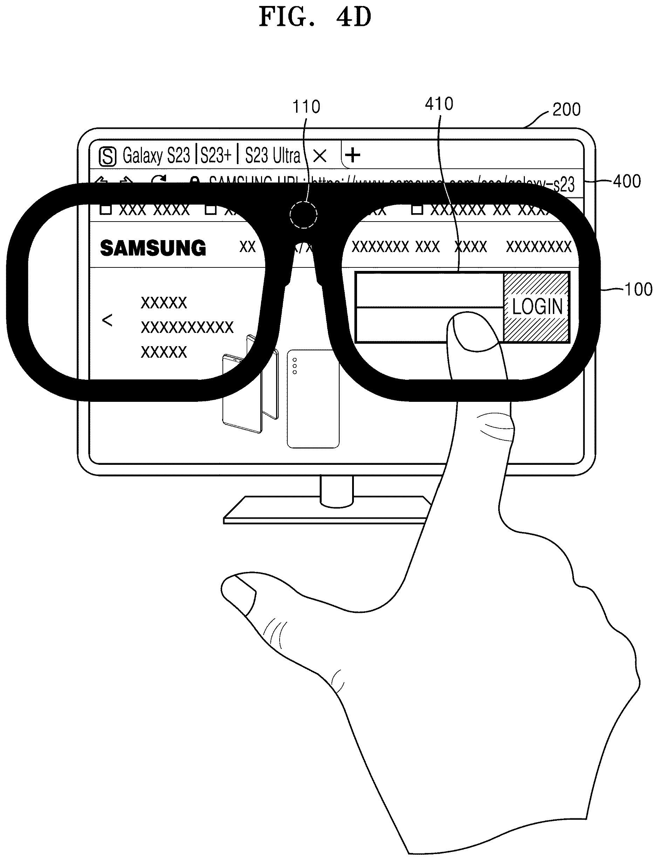

FIG. 4D is a diagram illustrating an operation in which the AR device 100 enters an AR login mode based on a hand pointing input, according to an embodiment of the present disclosure.

Referring to FIG. 4D, the AR device 100 may obtain an image by using a camera 110 to photograph a website 400 displayed by an external device 200. The AR device 100 may recognize a user's hand from the image by performing vision recognition using an artificial intelligence model and may identify a position of an area pointed to by the recognized hand. In the embodiment illustrated in FIG. 4D, the AR device 100 may execute an AR login mode when the user's hand points to a login area 410 of the website 400 displayed by the external device 200.

Although not illustrated in FIG. 4D, the AR device 100 may project and display, on a waveguide, a virtual UI (e.g., an icon) for executing the AR login mode. The AR device 100 may recognize the user's hand pointing to the virtual UI by using an artificial intelligence model and may execute the AR login mode based on a result of the recognizing.

In the embodiments illustrated in FIGS. 4A to 4D, when the AR login mode is executed, the AR device 100 may obtain an image by photographing a screen of a website displayed by the external device 200 by using the camera (see 110 of FIG. 3). In an embodiment of the present disclosure, the AR device 100 may photograph a video including a plurality of continuous image frames over time by using the camera 110.

FIG. 5 is a diagram illustrating an operation in which the AR device 100 according to an embodiment of the present disclosure extracts website information of a registered website 540 and obtains login information 560 of a registered website matching the extracted website information.

Referring to FIG. 5, a screen of a website 500 may be displayed on an external device 200. In response to an AR login mode being executed, the AR device 100 may obtain an image by photographing the website 500 displayed by the external device 200 through the camera (see 110 of FIG. 3) and may detect a site name area 510 and a URL area 520 from the obtained image (operation ①). In an embodiment of the present disclosure, the AR device 100 may include an artificial intelligence model that performs vision recognition so that a standardized site name area 510 and URL area 520 are detected from the image. The artificial intelligence model may be a deep neural network model trained to recognize the forms of the site name area 510 and the URL area 520 from the image through supervised learning of applying an image as input and applying the forms of the standardized site name area and URL area as ground truth. The deep neural network model may be, for example, a CNN model, but is not limited thereto. The deep neural network model may be implemented as at least one of, for example, an RNN, an RBM, a DBN, an BRDNN, and deep Q-networks. The processor (see 140 of FIG. 3) of the AR device 100 may input the image to the deep neural network model and may detect the site name area 510 and the URL area 520 from the image by performing inference using the deep neural network model.

The processor 140 of the AR device 100 may extract, by performing STR, text indicating the site name from an image included in the detected site name area 510 (operation ②). In the embodiment illustrated in FIG. 5, the processor 140 may perform STR to extract text 'SAMSUNG', which is the site name of the website 500.

The processor 140 may extract, by performing OCR, text indicating a URL from an image included in the URL area 520 (operation ③). In the embodiment illustrated in FIG. 5, the processor 140 may extract, by performing OCR, text 'www.samsung.com', which is the URL of the website 500. The processor 140 may obtain website information 530 including the site name and the URL of the website 500.

The AR device 100 may search for a matching registered website by comparing the extracted website information 530 with website information of the registered website 540 prestored in the memory (see 150 of FIG. 3) (operation ④). In the present disclosure, the 'registered website 540' refers to a website where login information including an ID and a password for logging in to a website is prestored and registered in a database by a user input. For example, the registered website 540 may include at least one of Naver, Woori Bank, or Samsung, but is not limited thereto. In an embodiment of the present disclosure, the registered website 540 may be stored in the registered website database (see 158 of FIG. 3) of the memory 150. The processor 140 of the AR device 100 may compare text constituting the site name and the URL included in the extracted website information 530 with text constituting the registered website 540 and search for a registered website that includes website information matching the extracted website information 530, by performing a string search. In the embodiment illustrated in FIG. 5, the processor 140 may identify 'Samsung' as the registered website matching the extracted website information 530 as a result of the string search.

The AR device 100 may obtain login information 550 of the matching registered website (operation ⑤). The processor 140 of the AR device 100 may obtain the login information 550 including an ID (e.g., 'joy1234') and a password (e.g., 'friends88S') of the registered website (e.g., 'Samsung') searched for from the registered website database 158.

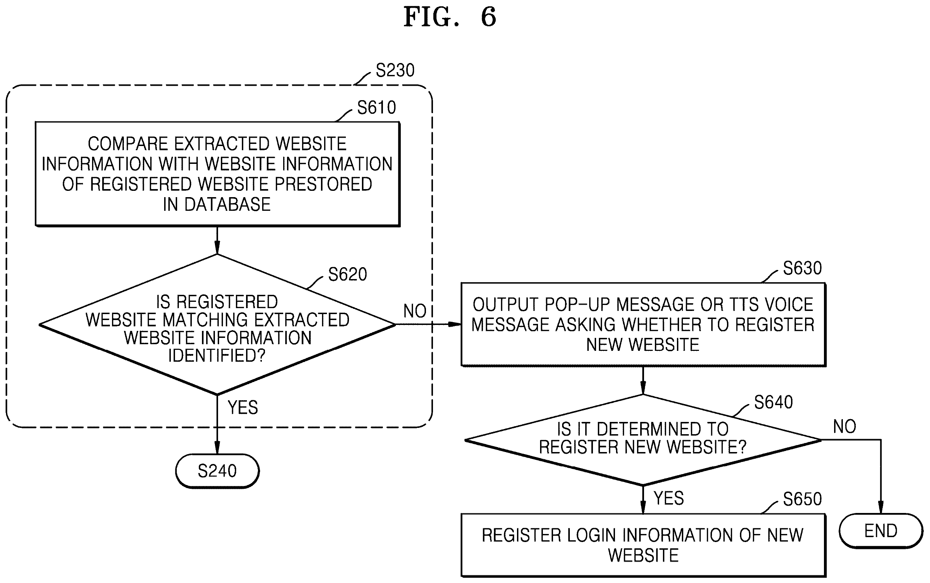

FIG. 6 is a flowchart showing a method, performed by the AR device 100, of registering login information of a new website, based on a result of identifying a registered website matching extracted website information, according to an embodiment of the present disclosure.

Operations S610 and S620 illustrated in FIG. 6 are operations that embody operation S230 illustrated in FIG. 2. After operation S620 is performed, operation S240 illustrated in FIG. 2 may be performed.

In operation S610, the AR device 100 compares extracted website information with website information of a registered website prestored in a database. Referring to the embodiment illustrated in FIG. 5 together, the processor (see 140 of FIG. 3) of the AR device 100 may search for the matching registered website by comparing the extracted website information (see 530 of FIG. 5) with the website information of the registered website (see 540 of FIG. 5) prestored in the memory (see 150 of FIG. 3). In an embodiment of the present disclosure, the processor 140 may compare text constituting the extracted website information 530 with text constituting website information of the registered websites 540 prestored in the registered website database by performing a string search (see 158 of FIG. 3).

In operation S620, the AR device 100 determines whether the registered website matching the extracted website information is identified. Referring to the embodiment illustrated in FIG. 5 together, the processor 140 of the AR device 100 may determine whether the registered website having the website information matching the extracted website information 530 is identified from a result of the string search of the registered website database 158.

When the matching registered website is identified (operation S240), the AR device 100 obtains login information including an ID and a password of the identified registered website.

When the matching registered website is not identified (operation S630), the AR device 100 outputs a pop-up message or a TTS voice message asking whether to register a new website. In an embodiment of the present disclosure, the AR device 100 may display a pop-up message asking a user whether to register login information of the new website. The pop-up message may include, for example, text "Would you like to register the login information of the new website?" In an embodiment of the present disclosure, the AR device 100 may convert text asking the user whether to register the login information of the new website into a voice message through a TTS module, and may output the converted voice message through the speaker (see 180 of FIG. 3).

In operation S640, the AR device 100 determines whether to register the new website. In an embodiment of the present disclosure, the AR device 100 may receive a user's hand pointing input or voice input and may determine whether to register the login information of the new website based on the received hand pointing input or voice input.

When the hand pointing input of pointing to a virtual image (a graphic UI) indicating 'confirmation' from the user is received or when the voice input (e.g., "yes") is received (operation S650), the AR device 100 registers the login information of the new website.

When the hand pointing input of pointing to a virtual image (a graphic UI) indicating 'rejection' from the user is received or when the voice input (e.g., "no") is received, the process is ended without registering the login information of the new website. When no input is received from the user, the process is also ended without registering the login information of the new website.

Operation S650 of registering the login information of the new website is described in detail with reference to FIGS. 7 and 8.

FIG. 7 is a flowchart showing a method, performed by the AR device 100, of registering login information of a new website, according to an embodiment of the present disclosure. Operations S710 and S760 illustrated in FIG. 7 are operations that embody operation S650 illustrated in FIG. 6.

FIG. 8 is a diagram illustrating an operation in which the AR device 100 according to an embodiment of the present disclosure manages storage capacity of the database 158 in a process of registering login information of a new website.

Hereinafter, an embodiment in which the AR device 100 registers login information of a new website is described with reference to FIGS. 7 and 8 together.

In operation S710 of FIG. 7, the AR device 100 obtains a plurality of image frames by photographing a login screen when a gaze point based on a user's gaze information or a hand pointing area is located on a login area of a new website. In an embodiment of the present disclosure, the AR device 100 may detect the gaze direction of the user's left eye and the gaze direction of the user's right eye by using the gaze tracking sensor (see 120 of FIG. 3), and may obtain position information of the gaze point (see G of FIG. 4C) where the gaze direction of the left eye and the gaze direction of the right eye converge. The AR device 100 may obtain a plurality of image frames by using the camera (see 110 of FIG. 3) to photograph the screen of the website (see 400 of FIG. 4C) when the position of the gaze point G is located on the login area (see 410 of FIG. 4C) of the website (see 400 of FIG. 4C) displayed by the external device (see 200 of FIGS. 1 and 4C). In an embodiment of the present disclosure, the AR device 100 may obtain a plurality of image frames by photographing the screen of the website 400 when the position of the gaze point G remains on the login area 410 for a preset time (e.g., 10 seconds). In an embodiment of the present disclosure, the AR device 100 may recognize the hand pointing input of pointing to the login area 410 of the website 400 displayed by the external device 200, and may obtain a plurality of image frames by using the camera 110 to photograph the screen of the website 400 when the hand pointing input is recognized.

The AR device 100 may obtain a plurality of image frames by photographing the entire screen of the website 400 displayed on the external device 200 within the field of view (FOV) of the camera 110. The plurality of image frames are image frames obtained by continuously photographing the process in which the user inputs the ID and the password from beginning to end over time, and may form a video file.

In operation S720, the AR device 100 stores, in a temporary buffer, the plurality of image frames captured through the camera 110. Referring to FIG. 8 together, the AR device 100 may store a video file 800 including a plurality of image frames in a temporary buffer temp of a database 158.

In operation S730, the AR device 100 determines whether the user's login has been successful. In an embodiment of the present disclosure, the processor (see 140 of FIG. 3) of the AR device 100 may recognize a login area from a plurality of image frames by performing vision recognition using an artificial intelligence model, and may determine that the login has been successful when the state of the login area changes. In an embodiment of the present disclosure, the processor 140 may recognize the screen of the website from the plurality of image frames, and may determine that the login has been successful when the recognized entire screen of the website changes or when a pop-up window disappears. In an embodiment of the present disclosure, the processor 140 may determine that the login has failed when there is no change in the login area or when the screen of the website does not change.

When it is determined that the login has been successful (operation S740), the AR device 100 stores the plurality of image frames in a storage space of memory. Referring to FIG. 8 together, the database 158 of the memory (see 150 of FIG. 3) may include a temporary buffer temp and a plurality of storages 158-1 to 158-n. When the AR device 100 determines that the user's login has been successful, the AR device 100 may move and store the video file 800 from the temporary buffer temp to one of the plurality of storages 158-1 to 158-n (in the embodiment illustrated in FIG. 8, the 'second storage 158-2').

In operation S750, the AR device 100 extracts login information including an ID and a password of a new website from the plurality of image frames. In an embodiment of the present disclosure, the processor 140 of the AR device 100 may detect the login area from the plurality of image frames by performing vision recognition using an artificial intelligence model, and may recognize text constituting an ID and a password input to the login area by performing OCR. The processor 140 may extract the recognized text as the login information.

In operation S760, the AR device 100 stores the extracted login information in the database together with a site name and a URL of the new website.

When the AR device 100 determines that the login has failed in operation S730, the AR device 100 deletes the plurality of image frames stored in the temporary buffer (see temp of FIG. 8) in operation S770.

In general, the capacity of the video file (see 800 of FIG. 8) including the plurality of image frames is large. The AR device 100 according to the embodiment illustrated in FIGS. 7 and 8 may efficiently manage the capacity of the memory 150 inside the AR device 100 by storing the video file 800 in the internal memory 150 only when the user successfully logs in to the new website and deleting the video file 800 temporarily stored in the temporary buffer (see temp of FIG. 8) when the user fails to log in.

FIG. 9 is a diagram illustrating an operation in which the AR device 100 according to an embodiment of the present disclosure outputs login information of a website.

Referring to FIG. 9, an external device 200 may access a website 900 and display a screen of the website 900, and the AR device 100 may overlay and display login information 920 on a login area 910 of the website 900 displayed by the external device 200. In a case that the AR device 100 is implemented as AR glasses, the AR device 100 may include a lens optical system including a waveguide and an optical engine as components. The optical engine may include a projector that generates light for a graphic UI including text, icons, or virtual images, and projects the light onto the waveguide. The optical engine may include, for example, an imaging panel, an illumination optical system, a projection optical system, etc. In an embodiment of the present disclosure, the optical engine may be disposed in the frame or temple of the AR glasses. In an embodiment of the present disclosure, the processor (see 140 of FIG. 3) of the AR device 100 may overlay and display the login information 920 on the login area 910 of the website 900 displayed by the external device 200 by projecting, onto the waveguide, a virtual UI including at least one of letters, numbers, special symbols, and combinations thereof representing the login information 920.

In an embodiment of the present disclosure, the processor 140 of the AR device 100 may display a portion of the ID and the password included in the login information 920 as '*'. The AR device 100 does not display all of the login information 920 but instead displays a portion of the login information 920 as '*', thereby providing a technical effect of preventing personal information leakage even in exceptional situations where a person other than the user spies on the AR device 100.

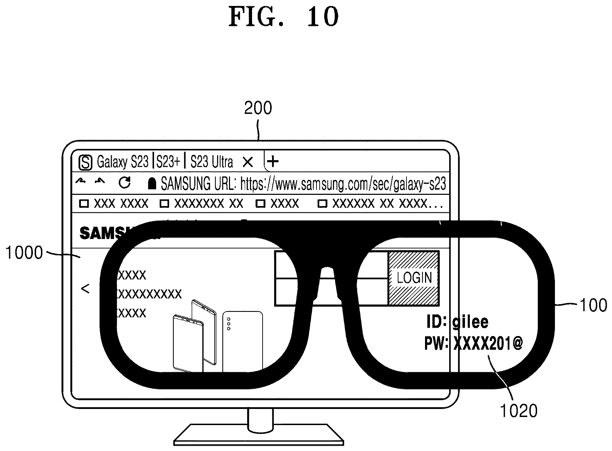

FIG. 10 is a diagram illustrating an operation in which the AR device 100 according to an embodiment of the present disclosure outputs login information 1020 of a website 1000.

Referring to FIG. 10, an external device 200 may access the website 1000 and display a screen of the website 1000, and the AR device 100 may display login information 1020 of the website 1000 displayed by the external device 200. The AR device 100 may be implemented as AR glasses and may include a lens optical system including a waveguide and an optical engine as components. Since the optical engine is the same as described with reference to FIG. 9, a redundant description thereof is omitted. In the embodiment illustrated in FIG. 10, the processor (see 140 of FIG. 3) of the AR device 100 may display the login information 1020 on an arbitrary area of a real world object (e.g., the 'external device 200') viewed by the user through the AR device 100 by projecting, onto the waveguide, a virtual UI including at least one of letters, numbers, special symbols, and combinations thereof representing the login information 1020.

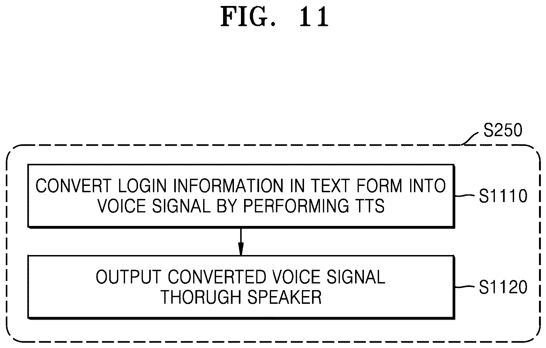

FIG. 11 is a flowchart showing a method, performed by the AR device 100, of converting login information into a voice signal and outputting the voice signal, according to an embodiment of the present disclosure.

Operations S1110 and S1120 illustrated in FIG. 11 are operations that embody operation S250 illustrated in FIG. 2.

In operation S1110, the AR device 100 converts, by performing TTS, login information in text form into a voice signal. In an embodiment of the present disclosure, the memory (see 150 of FIG. 3) may include a TTS module that converts text into a voice signal. The processor (see 140 of FIG. 3) of the AR device 100 may obtain, by executing instructions or program code included in the TTS module, a voice message by converting an ID and a password in text form into a voice signal.

In operation S1120, the AR device 100 outputs the converted voice signal through a speaker. In an embodiment of the present disclosure, the processor 140 of the AR device 100 may output a voice message, which is obtained by conversion using TTS, through the speaker (see 180 of FIG. 3).

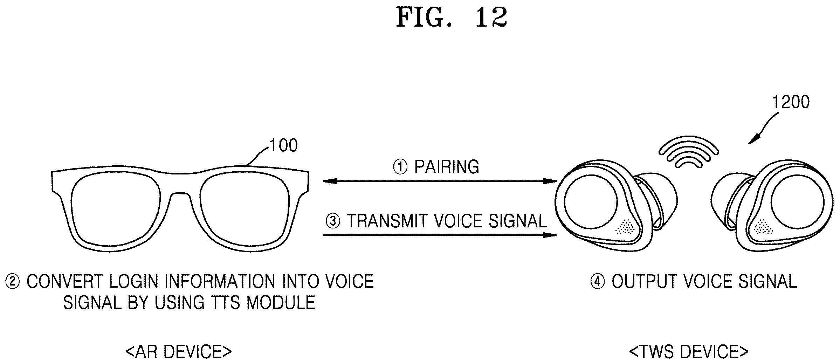

FIG. 12 is a diagram illustrating an operation in which the AR device 100 according to an embodiment of the present disclosure outputs login information through a TWS device 1200.

Referring to FIG. 12, the AR device 100 may be wirelessly paired with the TWS device 1200 (operation ①). The TWS device 1200 refers to a completely wireless earphone with no wire between a left receiver and a right receiver. The TWS device 1200 may include batteries in the left receiver and the right receiver, respectively, and the batteries may be charged through a charging case (not shown). The AR device 100 may be paired with the TWS device 1200 through a short-range wireless communication scheme. For example, the AR device 100 and the TWS device 1200 may be paired with each other through Bluetooth.

The AR device 100 may convert login information into a voice signal by using a TTS module (operation ②). A redundant description of a specific method, performed by the AR device 100, of converting login information into a voice signal is omitted.

The AR device 100 may transmit the voice signal to the TWS device 1200 (operation ③). In an embodiment of the present disclosure, the AR device 100 may transmit data of the voice signal to the TWS device 1200 through Bluetooth.

The TWS device 1200 may output the voice signal (operation ④).

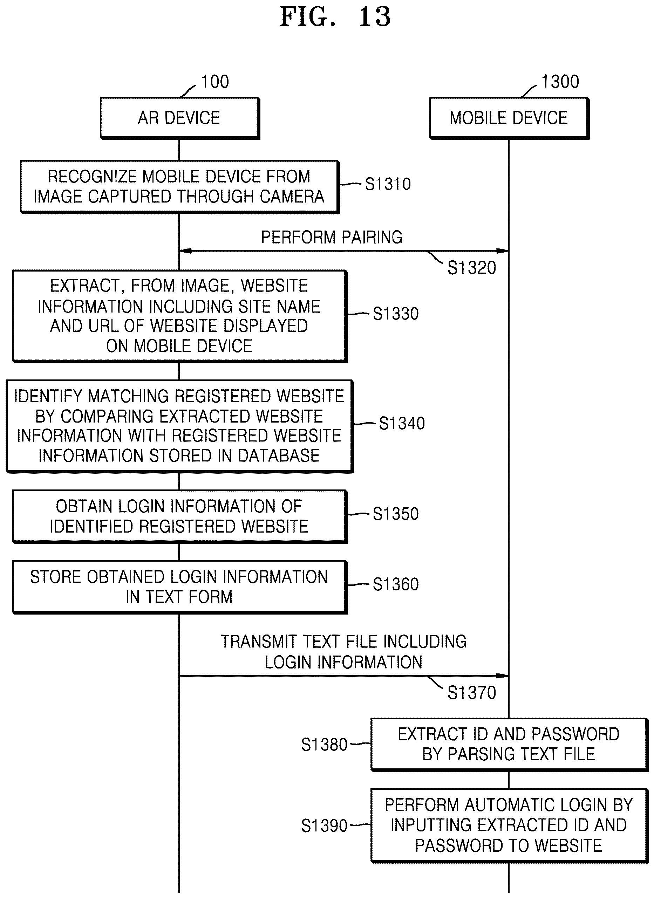

FIG. 13 is a flowchart showing an operating method of an AR device 100 and a mobile device 1300, according to an embodiment of the present disclosure.

In operation S1310, the AR device 100 recognizes the mobile device 1300 from an image captured through the camera (see 110 of FIG. 3). In an embodiment of the present disclosure, a user wearing the AR device 100 may look at the mobile device 1300 through the AR device 100, and the AR device 100 may obtain an image by photographing a real world object including the mobile device 1300 through the camera 110. The AR device 100 may recognize the mobile device 1300 from the image by performing vision recognition using an artificial intelligence model.

The mobile device 1300 may be, for example, a smartphone. However, the present disclosure is not limited thereto, and the mobile device 1300 may be any one of a tablet PC, an e-book reader, a PDA, a PMP, a navigation, an MP3 player, or a camcorder.

In operation S1320, the AR device 100 performs pairing with the mobile device 1300. In an embodiment of the present disclosure, the AR device 100 may be wirelessly paired with the mobile device 1300 by using Bluetooth or Wi-Fi Direct.

In operation S1330, the AR device 100 extracts, from the image, website information including a site name and a URL of a website displayed on the mobile device 1300. In operation S1340, the AR device 100 identifies a matching registered website by comparing the extracted website information with registered website information stored in the database of the memory (see 150 of FIG. 3). In operation S1350, the AR device 100 obtains login information of the identified registered website. Since operations S1330 to S1350 are to the same as operations S220 to S240 illustrated and described in FIG. 2, respectively, a redundant description thereof is omitted.

In operation S1360, the AR device 100 stores the obtained login information in text form.

In operation S1370, the AR device 100 transmits a text file including the login information to the mobile device 1300. In an embodiment of the present disclosure, the AR device 100 may transmit text data including the login information to the mobile device 1300 through Bluetooth or Wi-Fi Direct.

In operation S1380, the mobile device 1300 extracts an ID and a password by parsing the text file. In an embodiment of the present disclosure, the mobile device 1300 may extract website information including a site name and a URL from the text file.

In operation S1390, the mobile device 1300 performs automatic login by inputting the extracted ID and password to the website. In an embodiment of the present disclosure, the mobile device 1300 may determine matching or non-matching by comparing the website information extracted from the text file with information of the website currently being accessed. When it is determined that the website is matched, the mobile device 1300 may automatically log in to the website by inputting, to the website, the ID and the password extracted from the text file.

The embodiment illustrated in FIG. 13 relates to a function and/or operation in which the AR device 100 that includes a processor and operates in a stand-alone manner obtains login information of the website and transmits the login information to the mobile device 1300, and the mobile device 1300 automatically logs in to the website by using the login information transmitted from the AR device 100. The embodiment illustrated in FIG. 13 may be equally applied not only to automatically logging in to a website, but also to logging in to Internet banking, a public certificate, or an application. The mobile device 1300 according to an embodiment of the present disclosure may receive the login information about the website from the AR device 100, perform automatic login, and then store the login information, thereby enabling a user to automatically log in later even when not wearing the AR device 100.

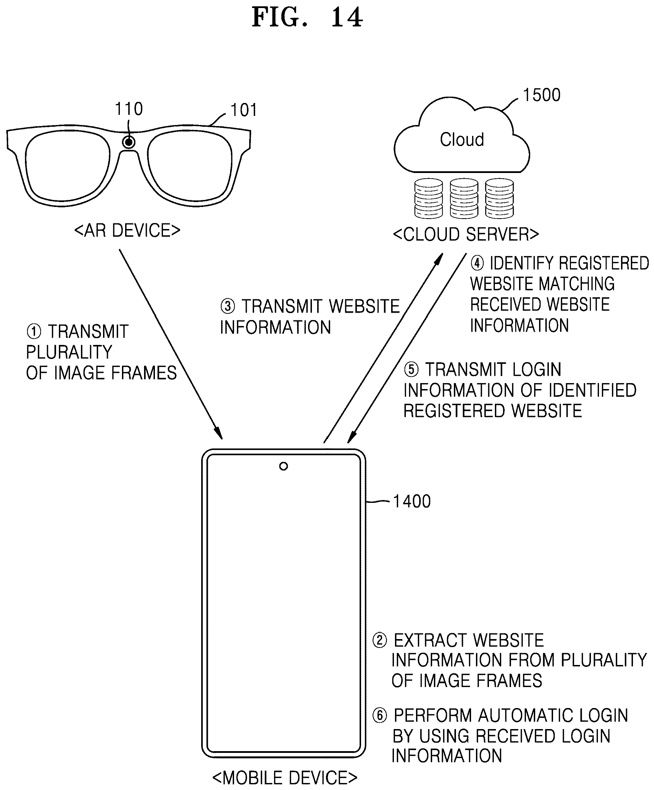

FIG. 14 is a diagram illustrating operations of an AR device 101, a mobile device 1400, and a cloud server 1500, according to an embodiment of the present disclosure.

Referring to FIG. 14, the AR device 101 may include a camera 110. The AR device 101 illustrated in FIG. 14 is a device that operates in a phone-tethered manner that is tethered with the mobile device 1400. An indicator representing performance, such as an operation speed or a processing speed of an internal processor (or an application processor), is relatively low, compared to the processor (see 140 of FIG. 3) of the AR device 101 illustrated in FIGS. 1 to 13. Accordingly, most functions and/or operations are performed by the mobile device 1400, and only an operation of outputting an execution result may be performed. The AR device 101 and the cloud server 1500 are synchronized with each other, and login information that the user used to log in through the mobile device 1400 while wearing the AR device 101 in the past may be stored in a database of the cloud server 1500.

In the embodiment illustrated in FIG. 14, the AR device 101 may obtain a plurality of image frames by using the camera 110 to photograph the website displayed by the external device, and may transmit the plurality of image frames to the mobile device 1400 (operation ①). The mobile device 1400 may extract website information from the plurality of image frames (operation ②) and may transmit the extracted website information to the cloud server 1500 (operation ③). The cloud server 1500 may identify a registered website matching the received website information (operation ④) and may transmit login information of the identified registered website to the mobile device 1400 (operation ⑤). The mobile device 1400 may perform automatic login by using the login information received from the cloud server 1500 (operation ⑥).

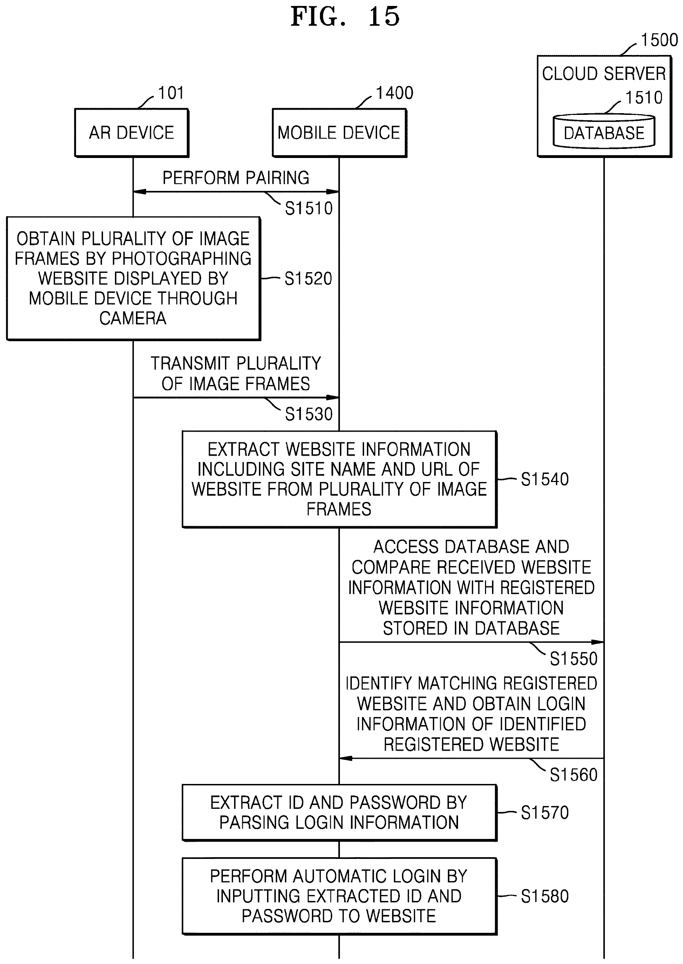

The operations (operations ① to ⑥) of the AR device 101, the mobile device 1400, and the cloud server 1500 illustrated in FIG. 14 are described in detail with reference to FIG. 15.

FIG. 15 is a diagram illustrating an operating method of an AR device 101, a mobile device 1400, and a cloud server 1500, according to an embodiment of the present disclosure.

In operation S1510, the AR device 101 performs pairing with the mobile device 1400. In an embodiment of the present disclosure, the AR device 101 may perform pairing with the mobile device 1400 through a short-range wireless communication scheme, for example, Bluetooth or Wi-Fi Direct.

In operation S1520, the AR device 101 obtain a plurality of image frames by photographing a website displayed by the mobile device 1400 through a camera. The plurality of image frames may be obtained continuously over time to form video data. In an embodiment of the present disclosure, the AR device 101 may obtain a plurality of image frames by photographing an execution screen of Internet banking, a public certificate, or an application as well as the website accessed and displayed by the mobile device 1400.

In operation S1530, the AR device 101 transmits the plurality of image frames to the mobile device 1400. In an embodiment of the present disclosure, the AR device 101 may transmit a plurality of image frames obtained in real time to the mobile device 1400, and the mobile device 1400 may stream the plurality of image frames in video form in real time.

In operation S1540, the mobile device 1400 extracts website information including a site name and a URL of the website from the plurality of image frames. In an embodiment of the present disclosure, the mobile device 1400 may detect a site name area and a URL area of the website from the plurality of image frames obtained by the AR device 101 by performing vision recognition using an artificial intelligence model. In an embodiment of the present disclosure, the artificial intelligence model may be a deep neural network model trained to recognize the forms of the site name area and the URL area from the image through supervised learning of applying an image as input and applying the forms of the standardized site name area and URL area as ground truth. The deep neural network model may be, for example, a CNN model, but is not limited thereto.

The mobile device 1400 may extract the website information including the site name and the URL from the detected site name area and URL area. In an embodiment of the present disclosure, the mobile device 1400 may extract, by performing STR, text indicating the site name from an image area included in the detected site name area. In an embodiment of the present disclosure, the mobile device 1400 may extract, by performing OCR, text indicating the URL from an image area included in the URL area.

In operation S1550, the mobile device 1400 accesses a database 1510 of the cloud server 1500 and compares the received website information with registered website information stored in the database 1510. The cloud server 1500 may include the database 1510 including login information of the registered website. The 'registered website' refers to a website that is registered by prestoring login information including an ID and a password for logging in to the website.

In operation S1560, the mobile device 1400 identifies a registered website matching a result of the comparing and obtains login information of the identified registered website from the cloud server 1500. The mobile device 1400 may compare the website information with website information of registered websites prestored in the database 1510. In an embodiment of the present disclosure, the mobile device 1400 may compare, by performing a string search on the database 1510 of the cloud server 1500, the website information with the website information of the registered websites stored in the database. When the matching registered website is identified from the result of the comparing, the mobile device 1400 may obtain login information including an ID and a password of the registered website identified from the database 1510.

In operation S1570, the mobile device 1400 extracts the ID and the password by parsing the login information. In an embodiment of the present disclosure, the mobile device 1400 may receive login information including a text file from the cloud server 1500 and extract the website information including the site name and the URL from the received text file.

In operation S1580, the mobile device 1400 performs automatic login by inputting the extracted ID and password to the website. In an embodiment of the present disclosure, the mobile device 1400 may determine matching or non-matching by comparing the website information extracted from the text file with information of the website currently being accessed. When it is determined that the website is matched, the mobile device 1400 may automatically log in to the website by inputting, to the website, the ID and the password extracted from the text file.

The embodiment illustrated in FIGS. 14 and 15 is an embodiment in which the AR device 101 including an internal processor (or an application processor) having relatively low performance, compared to FIG. 13, operates in a phone-tethered manner that is paired with the mobile device 1400. The AR device 101 only streams a video file including a plurality of image frames to the mobile device 1400, and the operation of identifying the registered website and obtaining the login information may be performed through the cloud server 1500. In addition, the mobile device 1400 may obtain the login information of the registered website from the cloud server 1500 and perform automatic login. The automatic login allows the user to log in without having to perform an inconvenient action of manually inputting his/her ID and password, thereby providing an effect of improving user convenience.

In the phone-tethered method, in a case that the information of the website is registered in the cloud server 1500, it is possible to automatically log in to the website later by using only the mobile device 1400 even without wearing the AR device 101. In addition, the embodiment illustrated in FIGS. 14 and 15 may be equally applied not only to automatically logging in to a website, but also to logging in to Internet banking, a public certificate, or an application.

An aspect of the present disclosure provides a method, performed by an AR device 100, of providing login information. An operating method of the AR device 100, according to an embodiment of the present disclosure, may include executing an AR login mode for logging in to a website accessed and displayed by an external device 200 (S210). The operating method of the AR device 100, according to an embodiment of the present disclosure, may include extracting website information including a site name and a URL of the website from an image captured through a camera in response to the AR login mode being executed (S220). The operating method of the AR device 100, according to an embodiment of the present disclosure, may include comparing the extracted website information with website information of registered websites that has been pre-registered and stored in a database of memory and identifying a registered website having website information matching the extracted website information, based on a result of the comparing (S230). The operating method of the AR device 100, according to an embodiment of the present disclosure, may include obtaining login information including ID and password information of the identified registered website from the database (S240). The operating method of the AR device 100, according to an embodiment of the present disclosure, may include outputting the obtained login information (S250).

In an embodiment of the present disclosure, the executing of the AR login mode (S210) may include: receiving a user input of pressing a button mapped to a function of executing the AR login mode or receiving a voice input for executing the AR login mode from a user; and executing the AR login mode based on the received user input or voice input.

In an embodiment of the present disclosure, the executing of the AR login mode (S210) may include executing the AR login mode in response to a hand pointing input of pointing to a login area of a website being recognized from the image captured through the camera.

In an embodiment of the present disclosure, the executing of the AR login mode (S210) may include: detecting a gaze point where a gaze direction of a user's left eye and a gaze direction of a user's right eye converge by using a gaze tracking sensor (see 120 of FIG. 3); and executing the AR login mode in response to the detected gaze point being located on the login area of the website displayed by the external device 200.

In an embodiment of the present disclosure, the operating method of the AR device 100 may further include registering an ID and a password of the website as login information of a new website when the registered website matching the extracted website information is not identified from the result of comparing the extracted website information with the website information of the registered website (S650).

In an embodiment of the present disclosure, the registering of the login information of the new website (S650) may include obtaining a plurality of image frames by photographing a login screen of the website through the camera (see 110 of FIG. 3) in response to a position of the gaze point according to the gaze direction of the user detected by the gaze tracking sensor 120 or an area pointed to by a user's hand recognized from the image being located on a login area of the new website displayed by the external device 200 (S710). The registering of the login information of the new website (S650) may include extracting the login information including the ID and the password of the new website from the plurality of obtained image frames (S750). The registering of the login information of the new website (S650) may include storing the extracted login information in the database together with a site name and a URL of the new website (S760).

In an embodiment of the present disclosure, in the outputting of the login information (S250), the AR device 100 may overlay and display the login information on the login area of the website displayed by the external device 200 by projecting, onto a waveguide, at least one of letters, numbers, special symbols, and combinations thereof representing the ID and the password included in the login information.

In an embodiment of the present disclosure, in the outputting of the login information (S250), the AR device 100 may display the login information on an arbitrary area of a real world object viewed by the user through the AR device 100 by projecting, onto the waveguide, at least one of letters, numbers, special symbols, and combinations thereof representing the ID and the password included in the login information.

In an embodiment of the present disclosure, the outputting of the login information (S250) may include converting an ID and a password in text form included in the login information into a voice signal by performing text-to-speech (TTS) (S1110), and outputting, through the speaker 180, the converted voice signal (S1120).

In an embodiment of the present disclosure, the operating method of the AR device 100 may further include recognizing the external device 200 from the image captured through the camera 110 (S1310), and pairing with the recognized external device 200 through a short-range wireless communication scheme (S1320). The operating method of the AR device 100 may further include storing the obtained login information as a text file and transmitting the stored text file to the external device 200 through the short-range wireless communication scheme (S1370). The external device 200 may obtain the login information including the ID and the password by parsing text included in the text file received from the AR device 100 and performing automatic login by inputting the obtained login information to the website (S1390).

An aspect of the present disclosure provides an AR device 100 for providing login information. The AR device 100 according to an embodiment of the present disclosure may include: a camera 110 configured to obtain an image by photographing an object in a real world space; a display unit 170 including a waveguide and an optical engine; memory 150 including a database storing at least one instruction and login information of registered websites; and at least one processor 140. The at least one processor 140 may be configured to execute the at least one instruction to execute an AR login mode and obtain an image by photographing a website displayed by an external device 200 through the camera 110 in response to the AR login mode being executed. The at least one processor 140 may be configured to execute the at least one instruction to extract website information including a site name and a URL of the website from the obtained image. The at least one processor 140 may be configured to execute the at least one instruction to compare the extracted website information with website information of the registered websites prestored in the database and identify a registered website having website information matching the extracted website information, based on a result of the comparing. The at least one processor 140 may be configured to execute the at least one instruction to obtain, from the database, login information including ID and password information of the identified registered website. The at least one processor 140 may be configured to execute the at least one instruction to output the obtained login information through the display unit 170.

In an embodiment of the present disclosure, the AR device 100 may further include a button protruding externally and disposed on the temple of glasses. The button may be mapped to the function of executing the AR login mode, and the at least one processor 140 may receive a user input of pressing the button. The at least one processor 140 may execute the AR login mode based on received user input.

In an embodiment of the present disclosure, the at least one processor 140 may be configured to execute the at least one instruction to recognize a hand pointing input of pointing to a login area of the website from the image captured through the camera 110 and execute the AR login mode based on the recognized hand pointing input.

In an embodiment of the present disclosure, the AR device 100 may further include a gaze tracking sensor 120 configured to detect a gaze direction of a user's left eye and a gaze direction of a user's right eye. The at least one processor 140 may be configured to execute the at least one instruction to detect a gaze point where the gaze direction of the user's left eye and the gaze direction of the user's right eye, which are detected by using the gaze tracking sensor 120, converge, and execute the AR login mode in response to the detected gaze point being located on the login area of the website displayed by the external device 200.

In an embodiment of the present disclosure, the at least one processor 140 may be configured to execute the at least one instruction to register an ID and a password of the website as login information of a new website when a registered website matching the extracted website information is not identified as a result of comparing the extracted website information with the website information of the registered website.

In an embodiment of the present disclosure, the at least one processor 140 may be configured to execute the at least one instruction to obtain a plurality of image frames by photographing a login screen of the website through the camera 110 in response to a position of the gaze point according to the gaze direction of the user or an area pointed to by a user's hand recognized from the image being located on a login area of the new website displayed by the external device 200. The at least one processor 140 may be configured to execute the at least one instruction to extract the login information including the ID and the password of the new website from the plurality of obtained image frames. The at least one processor 140 may be configured to execute the at least one instruction to store the extracted login information in the database together with a site name and a URL of the new website.

In an embodiment of the present disclosure, the at least one processor 140 may be configured to execute the at least one instruction to overlay and display the login information on the login area of the website displayed by the external device 200 by controlling the optical engine to project, onto the waveguide, at least one of letters, numbers, special symbols, and combinations thereof representing the ID and the password included in the login information.

In an embodiment of the present disclosure, the at least one processor 140 may be configured to execute the at least one instruction to display the login information on an arbitrary area of a real world object viewed by the user through the AR device 100 by controlling the optical engine to project, onto the waveguide, at least one of letters, numbers, special symbols, and combinations thereof representing the ID and the password included in the login information.

In an embodiment of the present disclosure, the AR device 100 may further include a speaker 180 that outputs an audio signal. The at least one processor 140 may convert an ID and a password in text form included in the login information into a voice signal by performing text-to-speech (TTS), and may output, through the speaker 180, the converted voice signal.

Another aspect of the present disclosure provides a method, performed by a mobile device 1400, of automatically log in to a website. In an embodiment of the present disclosure, an operating method of the mobile device 1400 may include receiving, from an AR device 101 paired through a short-range wireless communication scheme, a plurality of image frames captured by a camera of the AR device 101 (S1530). The operating method of the mobile device 1400 may include extracting, from the plurality of received image frames, website information including a site name and a URL of a website to be logged in to (S1540). The operating method of the mobile device 1400 may include comparing the extracted website information with registered website information stored in a cloud server (S1550). The operating method of the mobile device 1400 may include identifying a registered website matching the extracted website information, based on a result of the comparing, and obtaining login information including ID and password information of the identified registered website (S1560). The operating method of the mobile device 1400 may include extracting an ID and a password by parsing the obtained login information (S1570). The operating method of the mobile device 1400 may include executing automatic login by inputting the extracted ID and password to the website (S1580).

The program performed by the AR device 100, as described above, may be implemented as a hardware component, a software component, and/or a combination of the hardware component and the software component. The program may be executed by any system capable of executing computer-readable instructions.

The software may include a computer program, code, instructions, or a combination of one or more thereof, and may configure a processor to operate as desired or may instruct the processor independently or collectively.

The software may be implemented as a computer program including instructions stored in a computer-readable storage medium. Examples of the computer-readable recording medium may include a magnetic storage medium (e.g., ROM, RAM, floppy disk, hard disk, etc.) and an optical readable medium (e.g., compact disc-ROM (CD-ROM), digital versatile disc (DVD), etc.). The computer-readable recording medium may be distributed in network-connected computer systems, and computer-readable code may be stored and executed in a distributed manner. The medium may be readable by a computer, may be stored in memory, and may be executed by a processor.

The computer-readable storage medium may be provided in the form of a non-transitory storage medium. Here, 'non-transitory' means that the storage medium does not include a signal and is tangible, but does not distinguish between cases where data is stored semi-permanently or temporarily on the storage medium. For example, the 'non-transitory storage medium' may include a buffer in which data is temporarily stored.

Furthermore, a program according to embodiments disclosed in the present specification may be provided by being included in a computer program product. The computer program product may be traded between a seller and a buyer as commodities.

The computer program product may include a software program, a computer-readable storage medium storing the software program. For example, the computer program product may include a product (e.g., a downloadable application) in the form of a software program that is electronically distributed through a manufacturer of the AR device 100 or an electronic market (e.g., Samsung Galaxy Store^{™}). For electronic distribution, at least a part of the software program may be stored in a storage medium, or may be temporarily generated. In this case, the storage medium may be a storage medium of a server of a manufacturer of the AR device 100, a server of an electronic market, or a relay server temporarily storing a software program.

In a system including the AR device 100 and/or the server (e.g., the cloud server (see 1500 of FIGS. 14 and 15), the computer program product may include a storage medium of the server or a storage medium of the AR device 100. Alternatively, in a case that there is a third device (e.g., the mobile device (see 1400 of FIGS. 14 and 15)) that is communicatively connected to the AR device 100, the computer program product may include a storage medium of the third device. Alternatively, the computer program product may include a software program itself that is transmitted from the AR device 100 to the third device or from the third device to an electronic device.

In this case, either the AR device 100 or the third device may perform the method according to the disclosed embodiments by executing the computer program product. Alternatively, at least one of the AR device 100 and the third device may perform the method according to the disclosed embodiments in a distributed manner by executing the computer program product.

For example, the AR device 100 may perform control so that another electronic device communicatively connected to the AR device 100 performs the method according to the disclosed embodiments by executing a computer program product stored in the memory (see 150 of FIG. 3).

For example, the third device may perform control so that an electronic device communicatively connected to the third device performs the method according to the disclosed embodiment by executing the computer program product.

In a case that the third device executes the computer program product, the third device may download the computer program product from the AR device 100 and execute the downloaded computer program product. Alternatively, the third device may perform the method according to the disclosed embodiments by executing the computer program product provided in a pre-loaded state.

As described above, although the embodiments have been described with reference to the restrictive embodiments and drawings, various modifications and variations may be made thereto from the above description by those of ordinary skill in the art. For example, appropriate results may be achieved even when the technologies described above are performed in an order different from the methods described above, and/or components of the computer system or modules described above are coupled or combined in a manner different from the methods described above or are replaced or substituted by other components or equivalents.

## Claims

1. A method, performed by an augmented reality (AR) device (100), of providing login information, the method comprising:
executing an AR login mode for logging in to a website accessed and displayed by an external device (200) (S210);
extracting website information including a site name and a uniform resource locator (URL) of the website from an image captured through a camera in response to the AR login mode being executed (S220);
comparing the extracted website information with website information of registered websites that has been pre-registered and stored in a database of memory, and identifying a registered website having website information matching the extracted website information, based on a result of the comparing (S230);
obtaining login information including ID and password information of the identified registered website from the database (S240); and
outputting the obtained login information (S250).

2. The method of claim 1, wherein the executing of the AR login mode (S210) comprises:
detecting a gaze point where a gaze direction of a user's left eye and a gaze direction of a user's right eye converge by using a gaze tracking sensor (120); and
executing the AR login mode in response to the detected gaze point being located on a login area of the website displayed by the external device (200).

3. The method of claim 1 or 2, further comprising registering an ID and a password of the website as login information of a new website when the registered website matching the extracted website information is not identified from the result of the comparing of the extracted website information with the website information of the registered websites (S650).

4. The method of claim 3, wherein the registering of the login information of the new website comprises:
obtaining a plurality of image frames by photographing a login screen of the website through the camera in response to a position of the gaze point according to the gaze direction of the user detected by the gaze tracking sensor (120) or an area pointed to by a user's hand recognized from the image being located on a login area of the new website displayed by the external device (200) (S710);
extracting the login information including the ID and the password of the new website from the plurality of obtained image frames (S750); and
storing the extracted login information in the database together with a site name and a URL of the new website (S760).

5. The method of any one of claims 1 to 4, wherein the outputting of the login information (S250) comprises overlaying and displaying the login information on the login area of the website displayed by the external device (200) by projecting, onto a waveguide, at least one of letters, numbers, special symbols, and combinations thereof representing the ID and the password included in the login information.

6. The method of any one of claims 1 to 5, wherein the outputting of the login information (S250) comprises displaying the login information on an arbitrary area of a real world object viewed by the user through the AR device (100) by projecting, onto the waveguide, at least one of letters, numbers, special symbols, and combinations thereof representing the ID and the password included in the login information.

7. The method of any one of claims 1 to 4, wherein the outputting of the login information (S250) comprises:
converting the ID and a password in text form included in the login information into a voice signal by performing text-to-speech (TTS) (S1110); and
outputting, through a speaker (180), the converted voice signal through a speaker (180) (S1120).

8. The method of any one of claims 1 to 7, further comprising:
recognizing the external device (200) from the image captured through the camera (S1310);
pairing with the recognized external device (200) through a short-range wireless communication scheme (S1320); and
storing the obtained login information as a text file and transmitting the stored text file to the external device (200) through the short-range wireless communication scheme (S1370),
wherein the external device (200) obtains the login information including the ID and the password by parsing text included in the text file received from the AR device (100) and performing automatic login by inputting the obtained login information to the website (S1390).

9. An augmented reality (AR) device (100) for providing login information, the AR device (100) comprising:
a camera (110) configured to obtain an image by photographing an object in a real space;
a display unit (170) comprising a waveguide and an optical engine;
memory (150) comprising a database storing at least one instruction and login information of registered websites; and
at least one processor (140) configured to execute the at least one instruction to:
execute an AR login mode,
obtain an image by photographing a website displayed by an external device (200) through the camera (110) in response to the AR login mode being executed,
extract website information including a site name and a uniform resource locator (URL) of the website from the obtained image,
compare the extracted website information with website information of the registered websites prestored in the database,
identify a registered website having website information matching the extracted website information, based on a result of the comparing,
obtain, from the database, login information including ID and password information of the identified registered website, and
output, through the display unit (170), the obtained login information.

10. The AR device (100) of claim 9, further comprising a gaze tracking sensor (120) configured to detect a gaze direction of a user's left eye and a gaze direction of a user's right eye,
wherein the at least one processor (140) is further configured to execute the at least one instruction to:
detect a gaze point where the gaze direction of the user's left eye and the gaze direction of the user's right eye converge by using the gaze tracking sensor (120), and
execute the AR login mode in response to the detected gaze point being located on a login area of the website displayed by the external device (200).

11. The AR device (100) of claim 9 or 10, wherein the at least one processor (140) is further configured to execute the at least one instruction to register an ID and a password of the website as login information of a new website when a registered website matching the extracted website information is not identified from the result of the comparing of the extracted website information with the website information of the registered websites.

12. The AR device (100) of claim 11, wherein the at least one processor (140) is further configured to execute the at least one instruction to:
obtain a plurality of image frames by photographing a login screen of the website through the camera (100) in response to a position of the gaze point according to the gaze direction of the user or an area pointed to by a user's hand recognized from the image being located on a login area of the new website displayed by the external device (200),
extract login information including an ID and a password of the new website from the plurality of obtained image frames, and
store the extracted login information in the database together with a site name and a URL of the new website.

13. The AR device (100) of any one of claims 9 to 12, wherein the at least one processor (140) is further configured to execute the at least one instruction to overlay and display the login information on the login area of the website displayed by the external device (200) by controlling the optical engine to project, onto the waveguide, at least one of letters, numbers, special symbols, and combinations thereof representing the ID and the password included in the login information.

14. The AR device (100) of any one of claims 9 to 13, wherein the at least one processor (140) is further configured to execute the at least one instruction to display the login information on an arbitrary area of a real world object viewed by the user through the AR device (100) by controlling the optical engine to project, onto the waveguide, at least one of letters, numbers, special symbols, and combinations thereof representing the ID and the password included in the login information.

15. The AR device (100) of any one of claims 9 to 14, further comprising a speaker (180) configured to output an audio signal,
wherein the at least one processor (140) is further configured to execute the at least one instruction to:
convert the ID and the password in text form included in the login information into a voice signal by performing text to speech (TTS), and
output, through the speaker (180), the converted voice signal.
